# EUROPEAN PATENT APPLICATION

(11) **EP 4 716 229 A1**
(43) Date of publication of application: **25.03.2026**
(21) Application number: 24855268.9
(22) Date of filing: 22.03.2024
(51) Int. Cl.: H04N 23/70, G03B 7/097

(54) **PHOTOGRAPHING PARAMETER SETTING METHOD AND ELECTRONIC DEVICE**

(30) Priority: 18.08.2023 CN 202311050701
(71) Applicant: Honor Device Co., Ltd., Shenzhen, Guangdong 518040 (CN)
(72) Inventor: LI, Xiaoqin, Shenzhen, Guangdong 518040 (CN)
(74) Representative: Isarpatent
(86) International application number: PCT/CN2024/083275
(87) International publication number: WO 2025/039537

(57) **Abstract**

This application provides a photographing parameter setting method and an electronic device. In the method, an electronic device delivers an exposure parameter to hardware at an SOF of an Nth frame, so that the new exposure parameter starts to take effect in an (N+2)th frame. In addition, a new aperture parameter is enabled to start to take effect at an EOF of the Nth frame, thereby effectively reducing impact of aperture adjustment on the image frame.

## Description

This application claims priority to Chinese Patent Application No. 202311050701.1, filed with the China National Intellectual Property Administration on August 18, 2023 and entitled "PHOTOGRAPHING PARAMETER SETTING METHOD AND ELECTRONIC DEVICE", which is incorporated herein by reference in its entirety.

### TECHNICAL FIELD

This application relates to the field of terminal devices, and in particular, to a photographing parameter setting method and an electronic device.

### BACKGROUND

With development of terminal technologies, terminal devices are applied to increasingly extensive scenarios. For example, a user may use a mobile phone to perform photographing, so as to meet a requirement of the user to record daily life with photos. In the terminal device, an aperture (Aperture) is a component that is used to control a size of a lens opening, so as to control a depth of field, control lens imaging quality, and control an amount of admitted light in cooperation with a shutter. However, due to a limitation imposed by a size of the mobile phone, a fixed aperture is usually used in a camera of the terminal device for photographing. However, due to a limitation imposed by the fixed aperture, photographing and video recording experience of the user is general. Correspondingly, in the conventional technology, a camera module with a variable aperture is used, and a size of the variable aperture may be adjusted to control the amount of admitted light, so as to improve the photographing and video recording experience of the user.

### SUMMARY

This application provides a photographing parameter setting method and an electronic device. In the method, an aperture parameter is adjusted based on an EOF of an image frame, to reduce impact of aperture parameter adjustment on image frame exposure.

According to a first aspect, this application provides a photographing parameter setting method. The method includes: An electronic device obtains a first exposure parameter and a first aperture parameter of an Nth frame at a first moment. The electronic device delivers the first exposure parameter to a camera sensor at a second moment, where starting from an (N+2)th frame, the camera sensor performs exposure based on the first exposure parameter. An aperture component of the electronic device adjusts an aperture based on the first aperture parameter at a third moment. The first moment is before the second moment, the second moment is a moment corresponding to a start of frame delimiter SOF of the Nth frame, and the third moment is a moment corresponding to an end of frame delimiter EOF of the Nth frame. In this way, in this application, the exposure parameter is delivered at the moment corresponding to the SOF of the Nth frame, and the aperture parameter is enabled to take effect at the moment corresponding to the EOF of the Nth frame, so that in the (N+2)th frame, the aperture parameter and the exposure parameter can match each other, to reduce an impact range of aperture parameter adjustment on the image frame.

In a possible implementation, the method further includes: The electronic device displays an image corresponding to the (N+2)th frame based on the first exposure parameter and the first aperture parameter in display duration corresponding to the (N+2)th frame. In this way, matching between the exposure parameter and the aperture parameter can be implemented in the (N+2)th frame, to obtain a normally exposed image frame, and the (N+2)th frame is displayed in the corresponding display duration.

In a possible implementation, the method further includes: displaying an image corresponding to the Nth frame based on a second exposure parameter and a second aperture parameter in display duration corresponding to the Nth frame, where the second exposure parameter is different from the first exposure parameter, and the second aperture parameter is different from the first aperture parameter; and displaying the image corresponding to the Nth frame in display duration corresponding to an (N+1)th frame. In this way, in an exposure process, the electronic device discards only one frame (namely, the (N+1)th frame), to shorten freezing duration and reduce visual impact on a user.

In a possible implementation, the obtaining a first exposure parameter and a first aperture parameter of an Nth frame at a first moment includes: The electronic device obtains the first exposure parameter and the first aperture parameter in response to a received user operation; determines, through an automatic exposure module, that the first exposure parameter and the first aperture parameter act on the Nth frame; and caches the first exposure parameter and the first aperture parameter in a camera driver. In this way, the electronic device caches a photographing parameter before the Nth frame, and may send the photographing parameter to corresponding hardware during subsequent triggering.

In a possible implementation, the delivering the first exposure parameter to a camera sensor at a second moment includes: At the second moment, in response to a first SOF signal output by the camera sensor, an image front end IFE module indicates the camera driver to send the first exposure parameter to the camera sensor, where the first SOF signal is used to indicate the SOF of the Nth frame, where in response to the received first exposure parameter, starting from the (N+2)th frame, the camera sensor performs exposure based on the first exposure parameter. In this way, the IFE may obtain, by monitoring a specified pin of the camera sensor, the SOF signal output by the camera sensor, to trigger an exposure parameter delivery procedure.

In a possible implementation, that an aperture component adjusts an aperture based on the first aperture parameter at a third moment includes: At the second moment, in response to the first SOF signal output by the camera sensor, the IFE module indicates the camera driver to send the first aperture parameter to an optical image stabilization OIS module; the OIS module receives the first aperture parameter sent by the camera driver; and at the third moment, the OIS module obtains a first OIS pin signal output by the camera sensor, and sends the first aperture parameter to the aperture component, and the aperture component adjusts the aperture based on the first aperture parameter, where the first OIS pin signal is used to indicate the EOF of the Nth frame. In this way, the OIS module may monitor the sensor to determine the EOF of the Nth frame by using the OIS pin signal, so as to enable the aperture parameter to take effect at the EOF.

In a possible implementation, that an aperture component adjusts an aperture based on the first aperture parameter at a third moment includes: At the third moment, the camera driver obtains a first OIS pin signal output by the camera sensor, and sends the first aperture parameter to an OIS module; and the OIS module sends the first aperture parameter to the aperture component in response to the first aperture parameter sent by the camera driver, and the aperture component adjusts the aperture based on the first aperture parameter, where the first OIS pin signal is used to indicate the EOF of the Nth frame. In this way, the OIS does not need to pre-cache the aperture parameter, to save memory resources.

In a possible implementation, that an aperture component adjusts an aperture based on the first aperture parameter at a third moment includes: At the third moment, in response to a first EOF signal output by the camera sensor, the IFE module indicates the camera driver to send the first aperture parameter to an OIS module, where the first EOF signal is used to indicate the EOF of the Nth frame; and the OIS module sends the first aperture parameter to the aperture component in response to the first aperture parameter sent by the camera driver, and the aperture component adjusts the aperture based on the first aperture parameter. In this way, the OIS does not need to perform caching in advance, to save memory resources. The IFE may directly obtain the EOF signal, to accurately monitor the EOF of the Nth frame.

According to a second aspect, this application provides a photographing parameter setting method, applied to an electronic device. The method includes: obtaining a first exposure parameter and a first aperture parameter of an Nth frame at a first moment; delivering the first exposure parameter to a camera sensor at a second moment, where starting from an (N+2)th frame, the camera sensor performs exposure based on the first exposure parameter; and adjusting, by an aperture component, an aperture based on the first aperture parameter at a third moment, where the first moment is before the second moment, the second moment is a moment corresponding to a start of frame delimiter SOF of the Nth frame, and the third moment is a moment corresponding to an end of frame delimiter EOF of an (N+1)th frame. In this way, in this application, the exposure parameter is delivered at the moment corresponding to the SOF of the Nth frame, and the aperture parameter is enabled to take effect at the moment corresponding to the EOF of the (N+1)th frame, so that in an (N+3)th frame, the aperture parameter and the exposure parameter can match each other, to reduce an impact range of aperture parameter adjustment on the image frame.

In a possible implementation, the method further includes: displaying an image corresponding to the (N+3)th frame based on the first exposure parameter and the first aperture parameter in display duration corresponding to the (N+3)th frame.

In a possible implementation, the method further includes: displaying an image corresponding to the Nth frame based on a second exposure parameter and a second aperture parameter in display duration corresponding to the Nth frame, where the second exposure parameter is different from the first exposure parameter, and the second aperture parameter is different from the first aperture parameter; displaying an image corresponding to the (N+1)th frame based on the second exposure parameter and the second aperture parameter in display duration corresponding to the (N+1)th frame; and displaying the image corresponding to the (N+1)th frame in display duration corresponding to the (N+2)th frame.

In a possible implementation, the obtaining a first exposure parameter and a first aperture parameter of an Nth frame at a first moment includes: obtaining the first exposure parameter and the first aperture parameter in response to a received user operation; determining, through an automatic exposure module, that the first exposure parameter and the first aperture parameter act on the Nth frame; and caching the first exposure parameter and the first aperture parameter in a camera driver.

In a possible implementation, the delivering the first exposure parameter to a camera sensor includes: At the second moment, in response to a first SOF signal output by the camera sensor, an image front end IFE module indicates the camera driver to send the first exposure parameter to the camera sensor, where the first SOF signal is used to indicate the SOF of the Nth frame, where in response to the received first exposure parameter, starting from the (N+2)th frame, the camera sensor performs exposure based on the first exposure parameter.

In a possible implementation, the adjusting, by an aperture component, an aperture based on the first aperture parameter at a third moment includes: At the second moment, in response to the first SOF signal output by the camera sensor, the IFE module indicates the camera driver to send the first aperture parameter to an optical image stabilization OIS module; the OIS module receives the first aperture parameter sent by the camera driver; and at the third moment, the OIS module obtains a first OIS pin signal output by the camera sensor, and sends the first aperture parameter to the aperture component, and the aperture component adjusts the aperture based on the first aperture parameter, where the first OIS pin signal is used to indicate the EOF of the (N+1)th frame.

In a possible implementation, the adjusting, by an aperture component, an aperture based on the first aperture parameter at a third moment includes: At the third moment, the camera driver obtains a first OIS pin signal output by the camera sensor, and sends the first aperture parameter to an OIS module; and the OIS module sends the first aperture parameter to the aperture component in response to the first aperture parameter sent by the camera driver, and the aperture component adjusts the aperture based on the first aperture parameter, where the first OIS pin signal is used to indicate the EOF of the (N+1)th frame.

In a possible implementation, the adjusting, by an aperture component, an aperture based on the first aperture parameter at a third moment includes: At the third moment, in response to a first EOF signal output by the camera sensor, the IFE module indicates the camera driver to send the first aperture parameter to an OIS module, where the first EOF signal is used to indicate the EOF of the (N+1)th frame; and the OIS module sends the first aperture parameter to the aperture component in response to the first aperture parameter sent by the camera driver, and the aperture component adjusts the aperture based on the first aperture parameter.

The second aspect and any implementation of the second aspect respectively correspond to the first aspect and any implementation of the first aspect. For technical effects corresponding to the second aspect and the any implementation of the second aspect, refer to the technical effects corresponding to the first aspect and any implementation of the first aspect. Details are not described herein again.

According to a third aspect, this application provides an electronic device, including one or more processors, a storage, and one or more computer programs. The one or more computer programs are stored in the storage, and when the computer programs are executed by the one or more processors, the electronic device is enabled to perform the following steps: obtaining a first exposure parameter and a first aperture parameter of an Nth frame at a first moment; delivering the first exposure parameter to a camera sensor at a second moment, where starting from an (N+2)th frame, the camera sensor performs exposure based on the first exposure parameter; and adjusting, by an aperture component, an aperture based on the first aperture parameter at a third moment, where the first moment is before the second moment, the second moment is a moment corresponding to a start of frame delimiter SOF of the Nth frame, and the third moment is a moment corresponding to an end of frame delimiter EOF of the Nth frame.

In a possible implementation, when the computer programs are executed by the one or more processors, the electronic device is enabled to perform the following step: displaying an image corresponding to the (N+2)th frame based on the first exposure parameter and the first aperture parameter in display duration corresponding to the (N+2)th frame.

In a possible implementation, when the computer programs are executed by the one or more processors, the electronic device is enabled to perform the following steps: displaying an image corresponding to the Nth frame based on a second exposure parameter and a second aperture parameter in display duration corresponding to the Nth frame, where the second exposure parameter is different from the first exposure parameter, and the second aperture parameter is different from the first aperture parameter; and displaying the image corresponding to the Nth frame in display duration corresponding to the (N+1)th frame.

In a possible implementation, when the computer programs are executed by the one or more processors, the electronic device is enabled to perform the following steps: obtaining the first exposure parameter and the first aperture parameter in response to a received user operation; determining, through an automatic exposure module, that the first exposure parameter and the first aperture parameter act on the Nth frame; and caching the first exposure parameter and the first aperture parameter in a camera driver.

In a possible implementation, when the computer programs are executed by the one or more processors, the electronic device is enabled to perform the following step: At the second moment, in response to a first SOF signal output by the camera sensor, an image front end IFE module indicates the camera driver to send the first exposure parameter to the camera sensor, where the first SOF signal is used to indicate the SOF of the Nth frame, where in response to the received first exposure parameter, starting from the (N+2)th frame, the camera sensor performs exposure based on the first exposure parameter.

In a possible implementation, when the computer programs are executed by the one or more processors, the electronic device is enabled to perform the following steps: At the second moment, in response to the first SOF signal output by the camera sensor, the IFE module indicates the camera driver to send the first aperture parameter to an optical image stabilization OIS module; the OIS module receives the first aperture parameter sent by the camera driver; and at the third moment, the OIS module obtains a first OIS pin signal output by the camera sensor, and sends the first aperture parameter to the aperture component, and the aperture component adjusts the aperture based on the first aperture parameter, where the first OIS pin signal is used to indicate the EOF of the Nth frame.

In a possible implementation, when the computer programs are executed by the one or more processors, the electronic device is enabled to perform the following steps: At the third moment, the camera driver obtains a first OIS pin signal output by the camera sensor, and sends the first aperture parameter to an OIS module; and the OIS module sends the first aperture parameter to the aperture component in response to the first aperture parameter sent by the camera driver, and the aperture component adjusts the aperture based on the first aperture parameter, where the first OIS pin signal is used to indicate the EOF of the Nth frame.

In a possible implementation, when the computer programs are executed by the one or more processors, the electronic device is enabled to perform the following steps: At the third moment, in response to a first EOF signal output by the camera sensor, the IFE module indicates the camera driver to send the first aperture parameter to an OIS module, where the first EOF signal is used to indicate the EOF of the Nth frame; and the OIS module sends the first aperture parameter to the aperture component in response to the first aperture parameter sent by the camera driver, and the aperture component adjusts the aperture based on the first aperture parameter.

According to a fourth aspect, this application provides an electronic device, including one or more processors, a storage, and one or more computer programs. The one or more computer programs are stored in the storage, and when the computer programs are executed by the one or more processors, the electronic device is enabled to perform the following steps: obtaining a first exposure parameter and a first aperture parameter of an Nth frame at a first moment; delivering the first exposure parameter to a camera sensor at a second moment, where starting from an (N+2)th frame, the camera sensor performs exposure based on the first exposure parameter; and adjusting, by an aperture component, an aperture based on the first aperture parameter at a third moment, where the first moment is before the second moment, the second moment is a moment corresponding to a start of frame delimiter SOF of the Nth frame, and the third moment is a moment corresponding to an end of frame delimiter EOF of an (N+1)th frame.

In a possible implementation, when the computer programs are executed by the one or more processors, the electronic device is enabled to perform the following step: displaying an image corresponding to an (N+3)th frame based on the first exposure parameter and the first aperture parameter in display duration corresponding to the (N+3)th frame.

In a possible implementation, when the computer programs are executed by the one or more processors, the electronic device is enabled to perform the following steps: displaying an image corresponding to the Nth frame based on a second exposure parameter and a second aperture parameter in display duration corresponding to the Nth frame, where the second exposure parameter is different from the first exposure parameter, and the second aperture parameter is different from the first aperture parameter; displaying an image corresponding to the (N+1)th frame based on the second exposure parameter and the second aperture parameter in display duration corresponding to the (N+1)th frame; and displaying the image corresponding to the (N+1)th frame in display duration corresponding to the (N+2)th frame.

In a possible implementation, when the computer programs are executed by the one or more processors, the electronic device is enabled to perform the following steps: obtaining the first exposure parameter and the first aperture parameter in response to a received user operation; determining, through an automatic exposure module, that the first exposure parameter and the first aperture parameter act on the Nth frame; and caching the first exposure parameter and the first aperture parameter in a camera driver.

In a possible implementation, when the computer programs are executed by the one or more processors, the electronic device is enabled to perform the following step: At the second moment, in response to a first SOF signal output by the camera sensor, an image front end IFE module indicates the camera driver to send the first exposure parameter to the camera sensor, where the first SOF signal is used to indicate the SOF of the Nth frame, where in response to the received first exposure parameter, starting from the (N+2)th frame, the camera sensor performs exposure based on the first exposure parameter.

In a possible implementation, when the computer programs are executed by the one or more processors, the electronic device is enabled to perform the following steps: At the second moment, in response to the first SOF signal output by the camera sensor, the IFE module indicates the camera driver to send the first aperture parameter to an optical image stabilization OIS module; the OIS module receives the first aperture parameter sent by the camera driver; and at the third moment, the OIS module obtains a first OIS pin signal output by the camera sensor, and sends the first aperture parameter to the aperture component, and the aperture component adjusts the aperture based on the first aperture parameter, where the first OIS pin signal is used to indicate the EOF of the (N+1)th frame.

In a possible implementation, when the computer programs are executed by the one or more processors, the electronic device is enabled to perform the following steps: At the third moment, the camera driver obtains a first OIS pin signal output by the camera sensor, and sends the first aperture parameter to an OIS module; and the OIS module sends the first aperture parameter to the aperture component in response to the first aperture parameter sent by the camera driver, and the aperture component adjusts the aperture based on the first aperture parameter, where the first OIS pin signal is used to indicate the EOF of the (N+1)th frame.

In a possible implementation, the adjusting, by an aperture component, an aperture based on the first aperture parameter at a third moment includes: At the third moment, in response to a first EOF signal output by the camera sensor, the IFE module indicates the camera driver to send the first aperture parameter to an OIS module, where the first EOF signal is used to indicate the EOF of the (N+1)th frame; and the OIS module sends the first aperture parameter to the aperture component in response to the first aperture parameter sent by the camera driver, and the aperture component adjusts the aperture based on the first aperture parameter.

According to a fifth aspect, this application provides a computer-readable medium, configured to store a computer program. The computer program includes instructions for performing the method in the first aspect or any possible implementation of the first aspect.

According to a sixth aspect, this application provides a computer-readable medium, configured to store a computer program. The computer program includes instructions for performing the method in the second aspect or any possible implementation of the second aspect.

According to a seventh aspect, this application provides a computer program. The computer program includes instructions for performing the method in the first aspect or any possible implementation of the first aspect.

According to an eighth aspect, this application provides a computer program. The computer program includes instructions for performing the method in the second aspect or any possible implementation of the second aspect.

According to a ninth aspect, this application provides a chip. The chip includes a processing circuit and a transceiver pin. The transceiver pin and the processing circuit communicate with each other through an internal connection channel. The processing circuit performs the method in the first aspect or any possible implementation of the first aspect, to control a receive pin to receive a signal, and to control a transmit pin to send a signal.

According to a tenth aspect, this application provides a chip. The chip includes a processing circuit and a transceiver pin. The transceiver pin and the processing circuit communicate with each other through an internal connection channel. The processing circuit performs the method in the second aspect or any possible implementation of the second aspect, to control a receive pin to receive a signal, and to control a transmit pin to send a signal.

### BRIEF DESCRIPTION OF DRAWINGS

FIG. 1 is an example schematic diagram of an aperture change;
FIG. 2A(1) and FIG. 2A(2) are an example schematic diagram of manual exposure;
FIG. 2B(1) and FIG. 2B(2) are an example schematic diagram of automatic exposure;
FIG. 3 is an example schematic diagram of a hardware structure of an electronic device;
FIG. 4 is an example schematic diagram of a camera module;
FIG. 5 is an example schematic diagram of a software structure of an electronic device;
FIG. 6 is an example image frame exposure timing diagram;
FIG. 7 is an example image frame exposure timing diagram;
FIG. 8 is an example schematic diagram of a hardware connection;
FIG. 9 is an example schematic diagram of a signal output;
FIG. 10 is an example image frame exposure timing diagram;
FIG. 11 is an example schematic diagram of module interaction;
FIG. 12 is an example schematic flowchart of a photographing parameter setting method;
FIG. 13 is an example image frame exposure timing diagram;
FIG. 14 is an example schematic diagram of a hardware connection;
FIG. 15 is an example schematic flowchart of a photographing parameter setting method;
FIG. 16 is an example image frame exposure timing diagram;
FIG. 17 is an example schematic flowchart of a photographing parameter setting method;
FIG. 18 is an example schematic image frame exposure timing diagram; and
FIG. 19 is an example schematic diagram of a structure of an apparatus.

### DESCRIPTION OF EMBODIMENTS

The technical solutions in the embodiments of this application are clearly and completely described below with reference to the accompanying drawings in the embodiments of this application. Clearly, the described embodiments are some rather than all of the embodiments of this application. All other embodiments obtained by persons of ordinary skill in the art based on the embodiments of this application without creative efforts shall fall within the protection scope of this application.

In this specification, the term "and/or" is merely used to describe an association relationship between associated objects, and indicates that three relationships may exist. For example, A and/or B may indicate the following three cases: Only A exists, both A and B exist, and only B exists.

The terms "first", "second", and the like in the specification and claims of the embodiments of this application are used to distinguish between different objects, and are not used to describe a particular sequence of the objects. For example, a first target object, a second target object, and the like are used to distinguish between different target objects, and are not used to describe a particular sequence of the target objects.

In the embodiments of this application, words such as "example" or "for example" are used to represent giving an example, an illustration, or a description. Any embodiment or design solution described as "example" or "for example" in the embodiments of this application should not be explained as being preferred or advantageous over other embodiments or design solutions. Exactly, use of the words such as "example" or "for example" is intended to present a related concept in a specific manner.

In the descriptions of the embodiments of this application, unless otherwise stated, "a plurality of" means two or more. For example, a plurality of processing units mean two or more processing units, and a plurality of systems mean two or more systems.

For ease of understanding, technical terms in the embodiments of this application are first described.

Exposure parameter: An exposure parameter during photographing is used to determine brightness of an image. The exposure parameter includes at least one of parameters such as a shutter time and a gain magnitude.

A shutter time (Shutter Time, ST) is also referred to as an exposure time, and a shutter is a valve for controlling a light admission time. A longer shutter time indicates a larger amount of admitted light and higher brightness of a captured image. A shorter shutter time indicates a smaller amount of admitted light and lower brightness of a captured image.

A gain is a process of amplifying or reducing an electrical signal or a digital signal obtained after photoelectric conversion. An increase in the gain indicates higher brightness of a captured image than an actual scene. A decrease in the gain indicates lower brightness of a captured image than an actual scene.

An aperture is a component used in a camera to control a size of a lens opening, and is configured to control a depth of field, control lens imaging quality, and control an amount of admitted light in cooperation with a shutter. Usually, an aperture f-number (which may be referred to as an aperture parameter in the embodiments of this application) is used to represent an aperture size, and the f-number is equal to a focal length of a lens divided by an effective aperture diameter of the lens.

In some embodiments, an aperture setting includes one or more of the following settings: f/1.0, f/1.4, f/2.0, f/2.8, f/4.0, f/5.6, f/8.0, f/11, f/16, f/22, f/32, f/44, and f/64. A smaller f-number indicates a larger aperture setting. On the contrary, a larger f-number indicates a smaller aperture setting. When the shutter remains unchanged, a smaller f-number indicates a larger lens opening, a larger aperture (namely, aperture setting), a larger amount of admitted light, a brighter picture, a narrower focal plane, and greater background blur of a subject; and a larger f-number indicates a smaller lens opening, a smaller aperture, a smaller amount of admitted light, a darker picture, a wider focal plane, and higher clarity in front of and behind a subject.

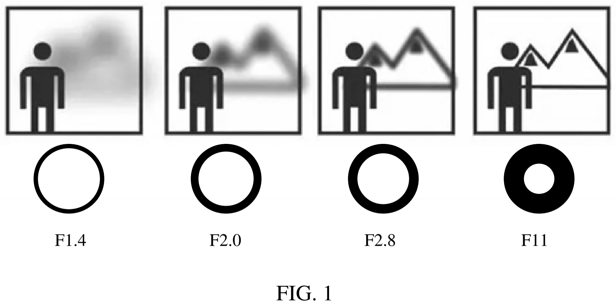

For example, FIG. 1 is an example schematic diagram of an aperture change. With reference to FIG. 1, aperture settings are respectively F1.4, F2.3, F2.8, and F11 from left to right. Correspondingly, as the f-number becomes larger, the lens opening gradually becomes smaller, and accordingly the amount of admitted light gradually becomes smaller. In addition, the background blur of the subject gradually becomes smaller, and the background is increasingly clear.

Optionally, the aperture parameter may alternatively be understood as one of exposure parameters. In the embodiments of this application, to better describe a correspondence between the aperture parameter and another exposure parameter, only an example in which the exposure parameter is distinguished from the aperture parameter is used for description.

Optionally, the aperture parameter and the exposure parameter may alternatively be collectively referred to as a photographing parameter (or a photographing parameter). This is not limited in this application.

Depth of field (Depth of Field, DOF): There are permissible circles of confusion in front of and behind a focal point. A distance between the two circles of confusion is referred to as a depth of focus, and a relatively clear imaging range in front of and behind a photographed object (namely, a focus point) corresponding to the focal point is a depth of field. A foreground depth of field includes a clear range in front of the focus point, and a background depth of field includes a clear range behind the focus point. Important factors that affect the depth of field include an aperture size, a focal length, and a photographing distance. A larger aperture (a smaller aperture f-number) indicates a shallower depth of field, and a smaller aperture (a larger aperture f-number) indicates a deeper depth of field. A longer focal length indicates a shallower depth of field, and a shorter focal length of a lens indicates a deeper depth of field. A longer photographing distance of the photographed object indicates a deeper depth of field, and a shorter photographing distance indicates a shallower depth of field.

Optical image stabilization (optical image stabilization, OIS): Through adjustment of a placement angle, a placement location, and the like of a transmissive optical element relative to an image sensor, an instrument jitter phenomenon occurring in a process of capturing an optical signal can be reduced, thereby improving imaging quality.

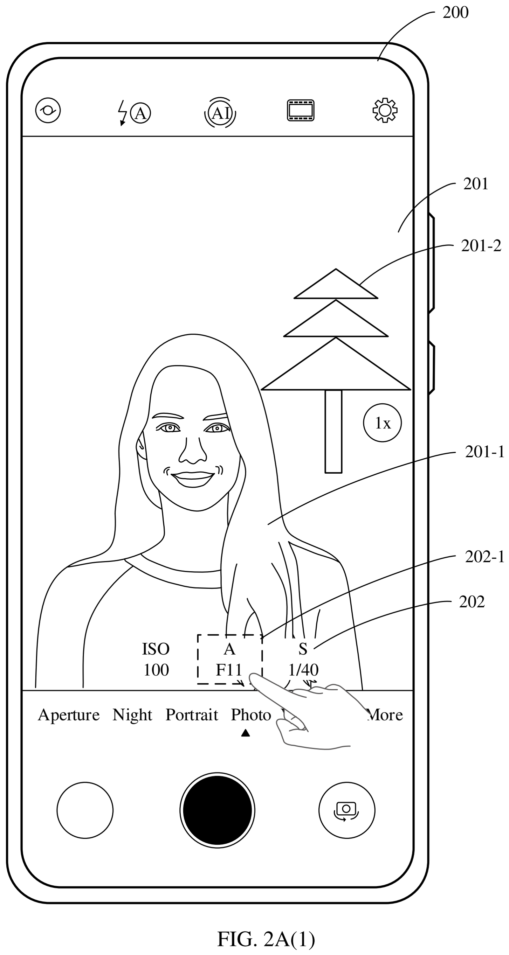

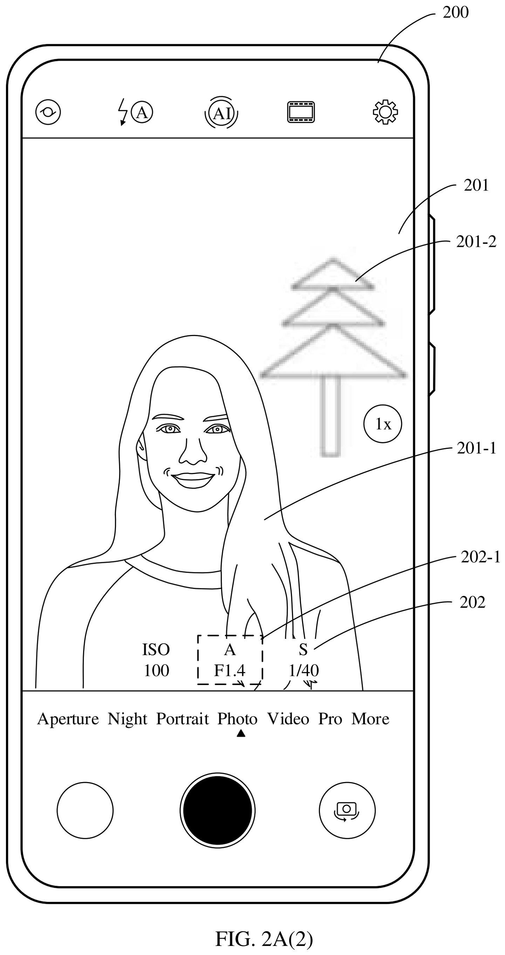

Manual exposure (Manual Exposure) is an exposure method for manually setting an exposure parameter (a shutter time, a gain, and an aperture) of a camera. FIG. 2A(1) and FIG. 2A(2) are an example schematic diagram of manual exposure. With reference to FIG. 2A(1) and FIG. 2A(2), a photographing preview interface 200 includes an image preview window 201 and another control. The image preview window 201 includes an image captured by a camera and an exposure parameter 202 (which may also be referred to as an exposure parameter control or an exposure parameter option). For example, the image includes a character 201-1 and an object 201-2. The character 201-1 is closer to the camera, and a depth of field of the character 201-1 is less than a depth of field of the object 201-2. For example, the exposure parameter 202 includes but is not limited to an ISO parameter, an aperture parameter 202-1, and the like.

For example, a user may manually adjust a value in the aperture parameter 202-1 to adjust an aperture parameter when the camera captures the image. For example, the user adjusts the aperture parameter from F11 to F1.4. As described above, as an aperture value becomes smaller, an aperture becomes larger. Therefore, a depth of field in the image captured by the camera becomes shallower. As shown in FIG. 2A(2), an image of the object 201-2 is more blurred than that in FIG. 2A(1).

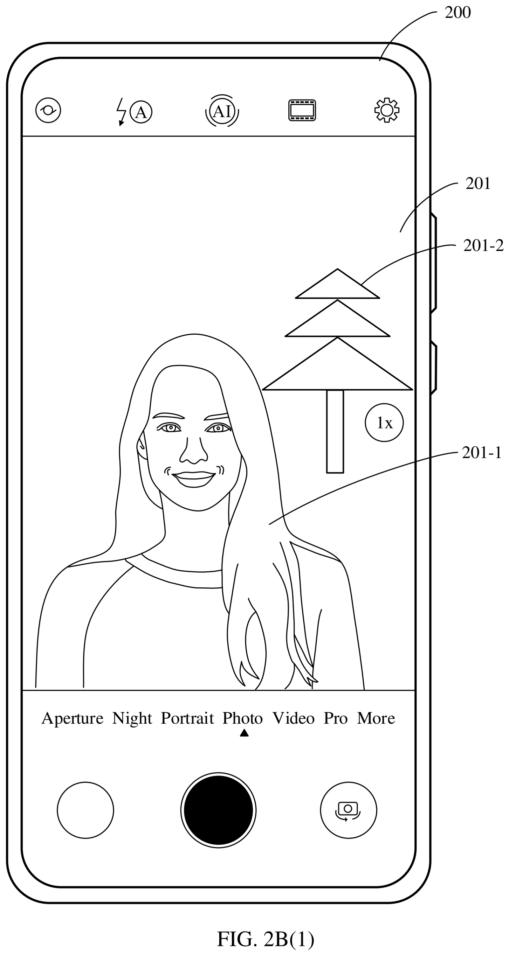

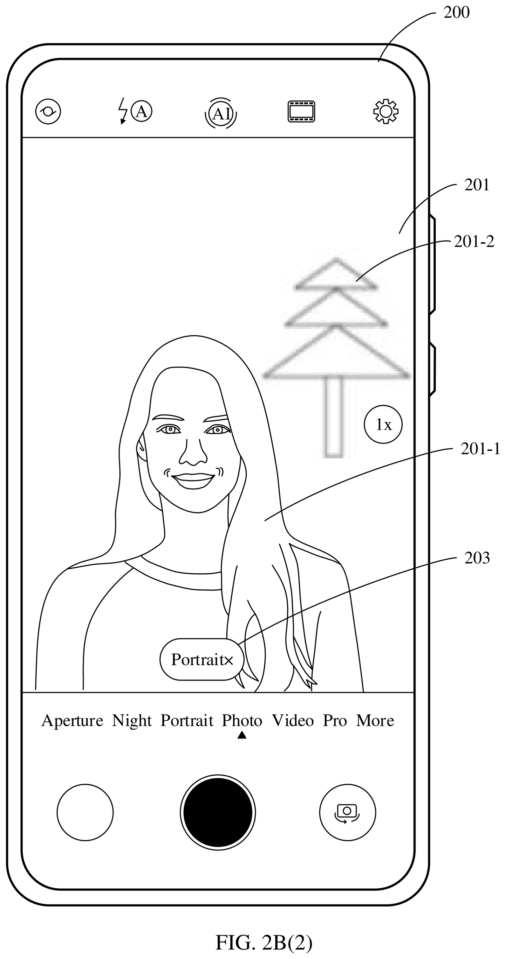

Automatic exposure (Automatic Exposure): A camera automatically adjusts, for exposure, an exposure parameter (a shutter time, a gain, and an aperture) by using an algorithm based on ambient brightness data, to ensure normal brightness of a photographed object. FIG. 2B(1) and FIG. 2B(2) are an example schematic diagram of automatic exposure. With reference to FIG. 2B(1) and FIG. 2B(2), an image preview window 201 in a photographing preview interface 200 displays an image captured by a camera. For other descriptions, refer to FIG. 2A(1) and FIG. 2A(2). Details are not described herein again. For example, in FIG. 2B(1), an aperture value of the camera is F11. In a process of capturing the image, the camera recognizes the image, and recognizes that the image includes a character 201-1. The camera may convert a photographing mode into a portrait mode, and a "Portrait" option 203 is displayed in the image preview interface 201, to indicate that it is currently in the portrait mode. Correspondingly, the camera may determine, based on a pre-cached correspondence between a photographing mode and an aperture parameter, that an aperture parameter corresponding to the portrait mode is F1.4. The camera may adjust an aperture, so that another image (for example, an image of an object 201-2) different from an image of the character 201-1 in the picture is blurred.

In the embodiments of this application, the terminal device may be a mobile terminal, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA), or may be a professional photography device, for example, a digital camera, a digital single lens reflex/micro digital single lens reflex, a motion camera, a pan-tilt-zoom camera, or an unmanned aerial vehicle. A specific type of the terminal device is not limited in the embodiments of this application.

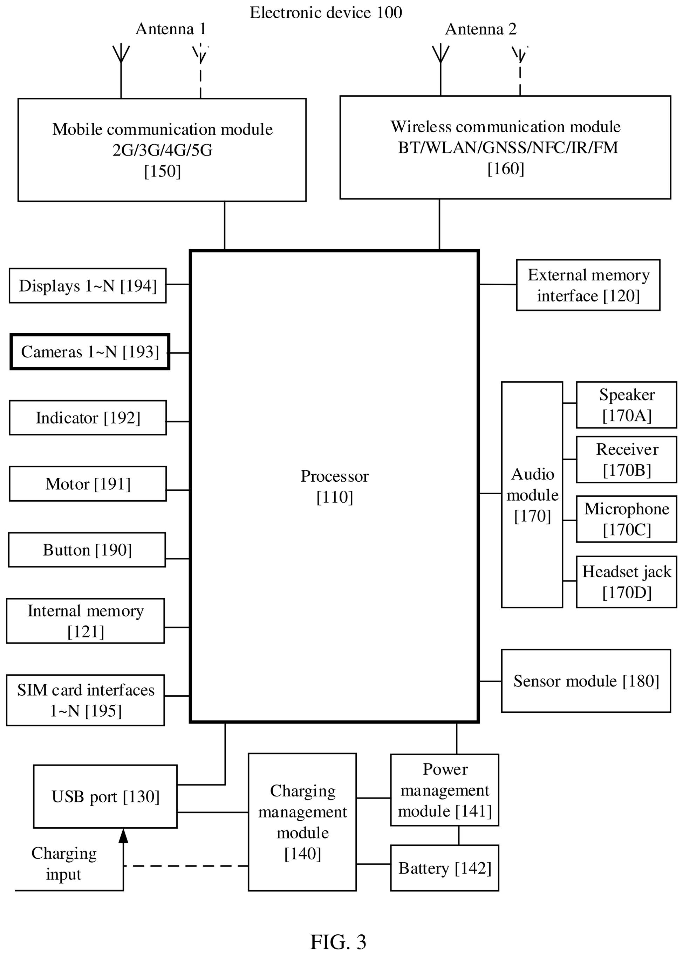

FIG. 3 is a schematic diagram of a structure of an electronic device 100. It should be understood that the electronic device 100 shown in FIG. 3 is merely an example of the electronic device, and the electronic device 100 may have more or fewer components than those shown in the figure, two or more components may be combined, or there may be a different component configuration. The components shown in FIG. 3 may be implemented by hardware that includes one or more signal processing and/or application-specific integrated circuits, software, or a combination of hardware and software.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a storage, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

A storage may be further disposed in the processor 110 to store instructions and data. In some embodiments, the storage in the processor 110 is a cache. The storage may store instructions or data recently used or cyclically used by the processor 110. If the processor 110 needs to use the instructions or the data again, the processor 110 may directly invoke the instructions or the data from the storage. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a bidirectional synchronous serial bus, including a serial data line (serial data line, SDA) and a serial clock line (derail clock line, SCL). In some embodiments, the processor 110 may include a plurality of groups of I2C buses. The processor 110 may be respectively coupled to a touch sensor, a charger, a flash light, the camera 193, and the like through different I2C bus interfaces. For example, the processor 110 (for example, the AP) may be coupled to the camera 193 through the I2C interface, so that the AP communicates with the camera 193 through the I2C bus interface, to implement a photographing function of the electronic device 100.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement the photographing function of the electronic device 100. The processor 110 communicates with the display 194 through the DSI interface, to implement a display function of the electronic device 100.

The GPIO interface may be configured by software. The GPIO interface may be configured as a control signal or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, a MIPI interface, or the like.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the electronic device 100. When charging the battery 142, the charging management module 140 may further supply power to the electronic device through the power management module 141.

The power management module 141 is configured to be connected to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

Still with reference to FIG. 3, the digital signal processor is configured to process a digital signal, and may further process another digital signal in addition to a digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, and MPEG4.

The external memory interface 120 may be configured to be connected to an external memory card, for example, a Micro SD card, to expand a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function, for example, music playing or sound recording, through the audio module 170, the speaker 170A, the receiver 170B, the microphone 170C, the headset jack 170D, the application processor, and the like.

The electronic device 100 implements a display function through the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N displays 194, where N is a positive integer greater than 1.

The electronic device 100 may implement the photographing function through the ISP, the camera 193, the video codec, the GPU, the display 194, the application processor, and the like.

The ISP is configured to process data fed back by the camera 193. For example, during photographing, a shutter is opened, light is transmitted to a photosensitive element of the camera (which may also be referred to as a sensor in the camera, where the sensor in the embodiments of this application is a sensor in a camera) through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of photographing scene. In some embodiments, the ISP may be disposed in the camera 193.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

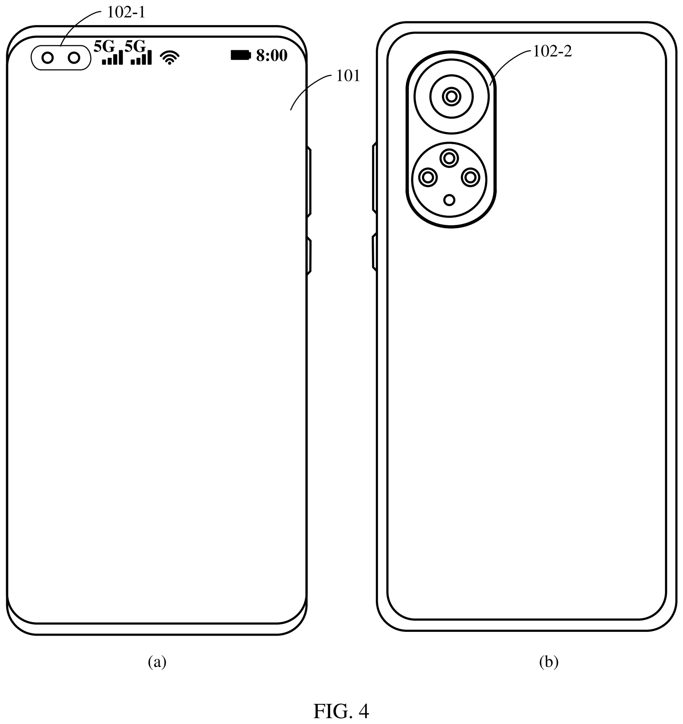

FIG. 4 is an example schematic diagram of a camera module. With reference to FIG. 4, (a) and (b) in FIG. 4 respectively schematically show a front surface and a back surface of an electronic device 100. The front surface of the electronic device 100 may be understood as a side facing a user when the user uses the electronic device 100. The back surface of the electronic device 100 may be understood as a side facing away from the user when the user uses the electronic device 100.

The camera module 102 is configured to capture a still image or a video. The camera module 102 may be disposed on the front surface and/or the back surface of the electronic device 100. When the camera module 102 is disposed on the front surface of the electronic device 100, a front-facing camera 102-1 may be configured to photograph a scene located on a side of the front surface of the electronic device 100, for example, configured to take a selfie, and may be referred to as a front-facing camera in some embodiments. When the camera module 102 is disposed on the back surface of the electronic device 100, a rear-facing camera 102-2 may be configured to photograph a scene located on a side of the back surface of the electronic device 100, and may be referred to as a rear-facing camera in some embodiments. During photographing, the user may select a corresponding camera module based on a photographing requirement.

It should be noted that a quantity of disposed camera modules 102 is not limited in embodiments of this application, and there may be one, two, four, or more camera modules. For example, one or more camera modules 102 may be disposed on the front surface of the electronic device 100, and/or one or more camera modules 102 may be disposed on the back surface of the electronic device 100. When a plurality of camera modules 102 are disposed, the plurality of camera modules 102 may be exactly the same or different. For example, for the plurality of camera modules 102, optical parameters of transmissive optical elements are different, the transmissive optical elements are disposed at different locations, the transmissive optical elements are in different forms, and so on. Relative locations when the plurality of camera modules are disposed are not limited in embodiments of this application.

For example, as shown in FIG. 4, any camera in the camera module 102 includes but is not limited to components or devices such as a lens, an image sensor component, an aperture component, and an OIS.

The lens may include but is not limited to one or more optical elements. For a concept of the OIS, refer to the foregoing descriptions. Details are not described herein again.

The image sensor component is mainly used for imaging. Specifically, the image sensor component captures an image, and exposes an image frame. The image sensor outputs a pulse signal when exposing the image frame. Specifically, when starting to expose a current frame, the image sensor may output a pulse signal "1", namely, a high level, through a first pin (referred to as a pin OIS Pin in embodiments of this application), to indicate that exposure of the current frame is started. Correspondingly, when the first pin outputs a low level "0", it indicates that exposure of the current frame ends. In embodiments of this application, the signal output by the first pin may also be referred to as an OIS Pin signal, and is used to indicate exposure start and end moments of the image frame.

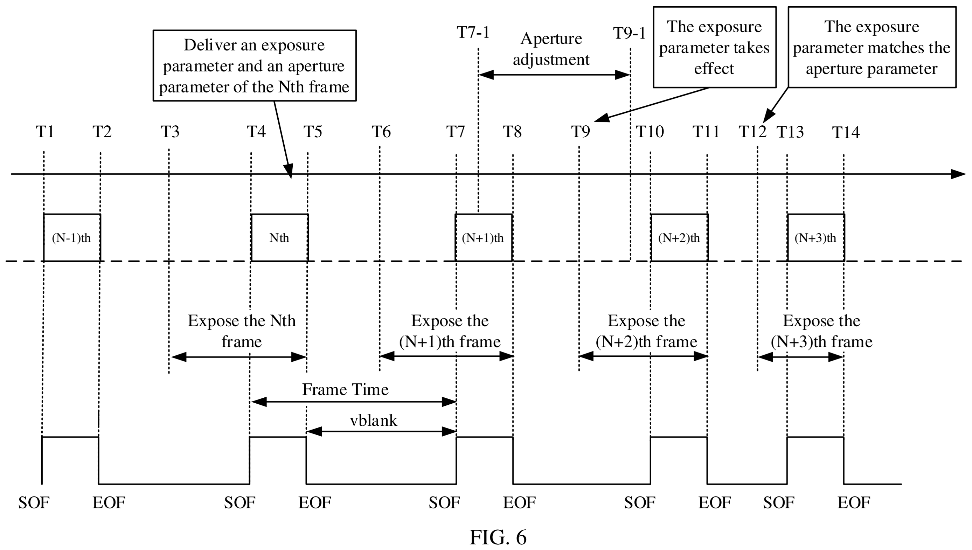

For example, the image sensor is further configured to: output a start of frame delimiter (start of frame delimiter, SOF) signal through a second pin based on the image frame, to identify a frame header of the current frame, and output an end of frame delimiter (end of frame delimiter, EOF) signal through the second pin, to identify a frame tail of the current frame. For example, a Frame Time (frame duration) of each frame is a length between an SOF and a next SOF, and includes an effective frame length between the SOF and an EOF and a non-exposed blank line (vertical blank, vblank, also referred to as a blank invalid line time, vertical blanking, or field blanking) in each frame. A specific correspondence is described in FIG. 6.

In embodiments of this application, the aperture component is of a variable aperture (variable aperture, VA) structure, and includes an aperture motor and a plurality of blades. The aperture motor may be used to control arrangement of the plurality of blades, to adjust a size of a light admission hole, so as to change an amount of admitted light. External light is admitted to the lens through the light admission hole of the aperture component, and light passing through the lens finally reaches the image sensor component for imaging.

A software system of the electronic device 100 may use a layered architecture, an event-driven architecture, a microkernel architecture, a microservice architecture, or a cloud architecture. In embodiments of this application, an Android system with a layered architecture is used as an example to describe a software structure of the electronic device 100.

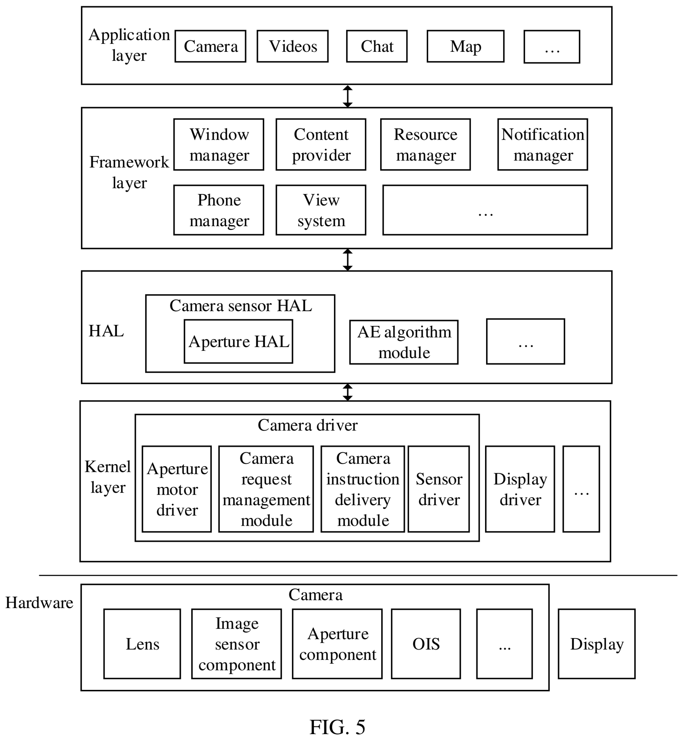

FIG. 5 is a block diagram of a software structure of an electronic device 100 according to an embodiment of this application.

In the layered architecture of the electronic device 100, software is divided into several layers, and each layer has a clear role and task. The layers communicate with each other through software interfaces. In some embodiments, the Android system is divided into an application layer, a framework layer, a hardware abstraction layer (hardware abstract layer, HAL), and a kernel layer from top to bottom.

The application layer may include a series of application packages.

As shown in FIG. 5, the application packages may include applications such as Camera, Gallery, Calendar, Calls, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 5, the application framework layer may include a window manager, a content provider, a view system, a phone manager, a resource manager, a notification manager, and the like.

The window manager is configured to manage a window program. The window manager may obtain a size of a display, determine whether a status bar exists, lock a screen, take a screenshot, and the like.

The content provider is configured to store and obtain data, and enable the data to be accessible by an application. The data may include a video, an image, audio, calls that are made and answered, a browsing history and bookmarks, a phone book, and the like.

The view system includes visual controls such as a text display control and a picture display control. The view system may be configured to construct an application. A display interface may include one or more views. For example, a display interface including an SMS message notification icon may include a view for displaying text and a view for displaying a picture.

The phone manager is configured to provide a communication function for the electronic device 100, for example, call status management (including answering, hanging up, and the like).

The resource manager provides various resources for an application, for example, a localized string, an icon, a picture, a layout file, and a video file.

The notification manager enables the application to display notification information in a status bar, and may be configured to convey a notification-type message that may automatically disappear after a short stay without user interaction. For example, the notification manager is configured to provide a notification of download completion, a message reminder, and the like. The notification manager may alternatively be a notification that appears in a top status bar of the system in a form of a graph or scroll bar text, for example, a notification of an application running in the background or a notification that appears on a screen in a form of a dialog window. For example, text information is prompted in the status bar, an alert tone is made, the electronic device vibrates, or an indicator light blinks.

The HAL layer is configured to perform hardware abstraction, to provide a virtual hardware platform for an operating system. The HAL layer includes but is not limited to a camera sensor HAL and an automatic exposure (Auto Exposure, AE).

The camera sensor HAL is configured to: obtain an exposure parameter, and invoke a camera driver.

The camera sensor HAL includes but is not limited to an aperture HAL. The aperture HAL is configured to: obtain an aperture parameter, and invoke an aperture motor driver.

The AE algorithm module is configured to obtain an exposure parameter based on an AE algorithm. The exposure parameter includes but is not limited to one or more of parameters such as a shutter time, a gain magnitude, or an aperture size.

The kernel layer is a layer between hardware and software. The kernel layer includes at least a display driver, a camera driver, and the like.

For example, the camera driver includes but is not limited to an aperture motor driver, a camera request management module, a camera instruction delivery module, and a sensor driver (which may also be referred to as an image sensor driver or an image sensor component driver, and is not limited in this application).

The hardware includes a camera (for description, refer to the foregoing descriptions, and details are not described herein again), a display, and the like.

It may be understood that the layers in the software structure shown in FIG. 5 and the components included at the layers do not constitute a specific limitation on the electronic device 100. In some other embodiments of this application, the electronic device 100 may include more or fewer layers than those shown in the figure, and each layer may include more or fewer components. This is not limited in this application.

FIG. 6 is an example image frame exposure timing diagram. With reference to FIG. 6, for example, an image frame in this example includes an (N-1)th frame, an Nth frame, an (N+1)th frame, an (N+2)th frame, and an (N+3)th frame.

Each time point in the embodiments of this application is described in detail below by using the Nth frame as an example. At a moment T3, a Sensor (which means an image sensor component, and is not repeatedly described below) starts to expose an image of the Nth frame. In embodiments of this application, each image frame may have same or different exposure duration. This is not limited in this application.

For example, an SOF is used to identify a frame header of the Nth frame, and an EOF is used to identify a frame tail of the Nth frame. A length (which means a time length) between the SOF of the Nth frame and a next SOF (namely, an SOF of the (N+1)th frame) is a Frame Time of the Nth frame. An effective length of the Nth frame is between the SOF and the EOF of the Nth frame, and vblank is between the EOF of the Nth frame and a next SOF (for the concepts, refer to the foregoing descriptions, and details are not described herein again).

For example, a moment at which the Sensor ends exposure of an image frame corresponds to an EOF of the image frame.

In embodiments of this application, the Sensor outputs an SOF signal (for example, a high level) through a second pin, to indicate the frame header of the Nth frame. The Sensor outputs an EOF signal (for example, a low level) through the second pin, to indicate the frame tail.

In this example, it is assumed that an electronic device adjusts an exposure parameter and an aperture parameter of the (N+1)th frame at any moment (which may be any moment before the SOF of the (N+1)th frame, and is not limited in this application) of T4~T5. It is assumed that the exposure parameter before adjustment is an exposure parameter 1, and the aperture parameter before adjustment is an aperture parameter 1. An adjusted exposure parameter is an exposure parameter 2, and an adjusted aperture parameter is an aperture parameter 2.

For example, based on a hardware constraint, the exposure parameter starts to take effect in a second frame after adjustment (that is, after hardware receives a new exposure parameter, the exposure parameter does not take effect immediately, but starts to take effect at an interval of one frame), that is, the new exposure parameter is delivered after the SOF of the Nth frame, and starts to take effect in the (N+2)th frame. Correspondingly, as shown in FIG. 6, the new exposure parameter (namely, the exposure parameter 2) starts to take effect in the (N+2)th frame. That is, at a moment T9, when the Sensor starts to expose the (N+2)th frame, the Sensor exposes the (N+2)th frame by using the exposure parameter 2.

For example, during aperture parameter adjustment, an aperture driver usually delivers a new aperture parameter (namely, the aperture parameter 2) to an aperture motor, and the aperture motor controls a blade in a lens to move, to adjust an aperture size. It usually takes approximately 20 ms for the aperture motor to adjust the aperture size.

Still with reference to FIG. 6, based on the aperture parameter (namely, the aperture parameter 2) and by using the SOF of the (N+1)th frame as a reference, an aperture component starts to adjust the aperture size, and adjustment duration is approximately 20 ms. It should be noted that using the SOF of the (N+1)th frame as a reference means that in an ideal state, starting from the SOF of the (N+1)th frame, the aperture component starts to adjust the aperture size. However, there may be a specific delay between an actual adjustment start moment and the SOF of the (N+1)th frame. For example, starting from a moment T7-1, the aperture component starts to adjust the aperture size. In addition, at a moment T9-1, aperture adjustment is completed, that is, an aperture is adjusted to a size indicated by the aperture parameter 2.

For example, as shown in FIG. 6, at moments T6-T8, the Sensor exposes the (N+1)th frame. Between T6~T7-1, the exposure parameter corresponding to the (N+1)th frame is the exposure parameter 1, and the aperture parameter is the aperture parameter 1. At moments T7-1~T8, the exposure parameter corresponding to the (N+1)th frame is the exposure parameter 1 (that is, the new exposure parameter does not take effect), and the aperture parameter is between the aperture parameter 1 and the aperture parameter 2 (that is, the aperture parameter is being adjusted, and a specific value for adjustment may be determined based on an actual requirement, and is not limited in this application).

For example, the exposure parameter and the aperture parameter are calculated by an AE, and there is a correspondence between the two parameters, that is, the two parameters match each other. If the exposure parameter does not match the aperture parameter, image exposure abnormality (for example, brightness abnormality of a part of an image) is caused. Therefore, at the moments T7-1~T8, because the exposure parameter (namely, the exposure parameter 1) of the (N+1)th frame does not match the aperture parameter (that is, the specified aperture parameter 2 is not reached), exposure abnormality of an image of the (N+1)th frame is caused. To avoid artifacts in a displayed picture caused by exposure abnormality, usually, an AP side discards an image frame with exposure abnormality, that is, after an AP receives the (N+1)th frame exposed by the Sensor, the AP side discards the (N+1)th frame. In a corresponding Frame Time (or may be understood as display duration corresponding to the (N+1)th frame) in which the (N+1)th frame needs to be originally displayed in a photographing preview interface, an "old" frame, namely, the image corresponding to the Nth frame, is displayed. From a perspective of a user, a freezing phenomenon occurs in the photographing preview interface, that is, a same image frame is displayed in two adjacent Frame Times.

Still with reference to FIG. 6, at moments T9~T11, the Sensor exposes the (N+2)th frame. For example, as described above, at an exposure start moment (namely, the moment T9) of the (N+2)th frame, the new exposure parameter (namely, the exposure parameter 2) takes effect. Correspondingly, at moments T9~T9-1, an exposure parameter corresponding to the (N+2)th frame is the exposure parameter 2. However, the aperture does not change to the aperture parameter 2. Therefore, at the moments T9~T9-1, the exposure parameter of the (N+2)th frame still does not match the aperture parameter. Similar to the (N+1)th frame, the AP discards the (N+2)th frame. That is, the image of the Nth frame continues to be displayed in a Frame Time in which the (N+2)th frame is originally displayed. For a principle of the frame, refer to that of the (N+1)th frame. Details are not described herein again.

At a moment T12, the Sensor starts to expose the (N+3)th frame. Because adjustment of the aperture is completed, at the moment T12, an exposure parameter (namely, the exposure parameter 2) of the (N+3)th frame matches the aperture parameter (namely, the aperture parameter 2). The Sensor exposes the (N+3)th image frame based on the exposure parameter 2 and the aperture parameter 2, to obtain a normal image frame. An image corresponding to the (N+3)th frame is displayed in the photographing preview interface.

In conclusion, in the foregoing embodiment, because the exposure parameter is set based on the SOF of the Nth frame, and the aperture parameter is set based on the SOF of the (N+1)th frame (that is, starts to take effect at the SOF of the (N+1)th frame), exposure abnormality occurs in at least two frames. Optionally, if the AP side discards the image frame with exposure abnormality, picture freezing is caused.

To resolve the foregoing problem, embodiments of this application provide a photographing parameter setting method. In the method, an electronic device may adjust an aperture parameter based on an EOF of an image frame without changing a hardware structure of the electronic device, to reduce impact of aperture parameter adjustment on the image frame.

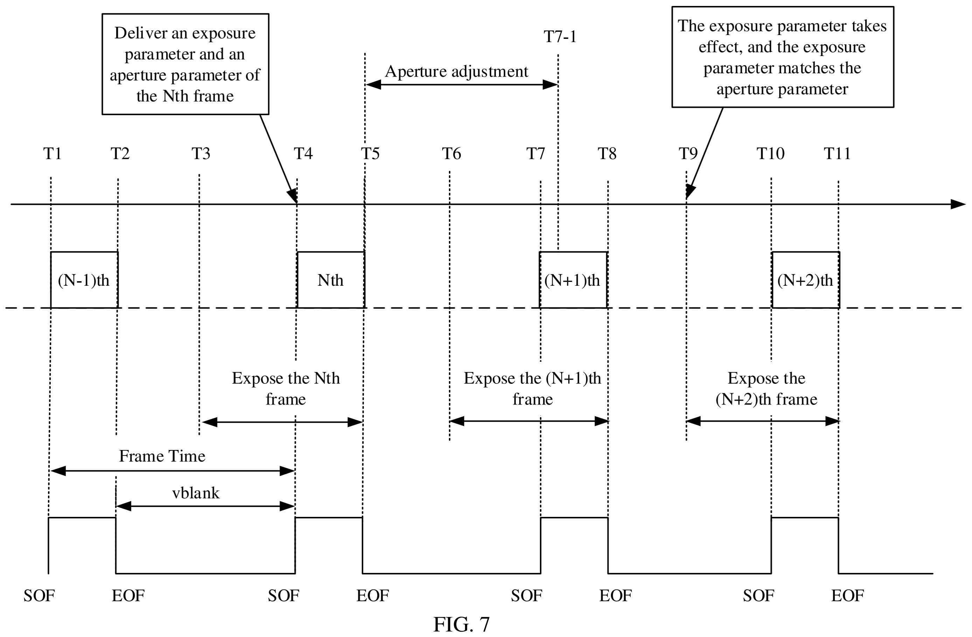

FIG. 7 is an image frame exposure timing diagram corresponding to a photographing parameter setting method according to an embodiment of this application. With reference to FIG. 7, in this embodiment of this application, an electronic device delivers an exposure parameter and an aperture parameter of an Nth frame to a camera at an SOF of the Nth frame. At an EOF of the Nth frame, an aperture starts to be adjusted, and adjustment duration is approximately 20 ms. In addition, based on a protocol agreement, a new exposure parameter starts to take effect at an exposure time point (namely, a moment T9) of an (N+2)th frame. At moments T5~T7-1, in an aperture adjustment process, an aperture parameter does not match an exposure parameter. Correspondingly, an (N+1)th image frame is discarded (for a principle, refer to the foregoing descriptions). At an exposure moment, namely, the moment T9, of the (N+2)th frame, the new exposure parameter takes effect, and the aperture is adjusted to a specified value, that is, an exposure parameter of the (N+2)th frame matches an aperture parameter, and the (N+2)th frame is normally exposed. That is, according to the photographing parameter setting method in this embodiment of this application, only one image frame is discarded, to shorten freezing duration and improve user experience.

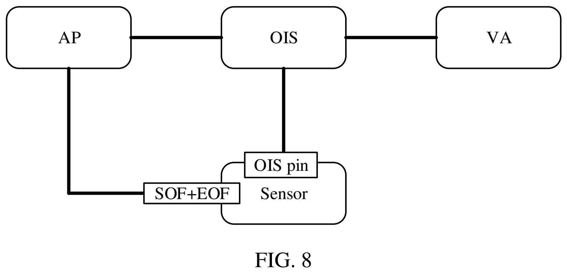

FIG. 8 is an example schematic diagram of a hardware connection. With reference to FIG. 8, for example, an AP is connected to an OIS, the OIS is connected to a VA (or may be understood as an aperture component, and is not repeatedly described below), the AP is connected to a Sensor (namely, an image sensor component), and the Sensor is connected to the OIS. The connection in FIG. 8 is a physical connection. For example, the modules may be connected through an I2C bus. This is not limited in this application.

For example, the OIS may monitor a pin OIS pin (which may also be referred to as a first pin) of the Sensor through the connection to the Sensor. The AP may monitor an SOF+EOF pin (which may also be referred to as a second pin) of the Sensor through the connection to the Sensor.

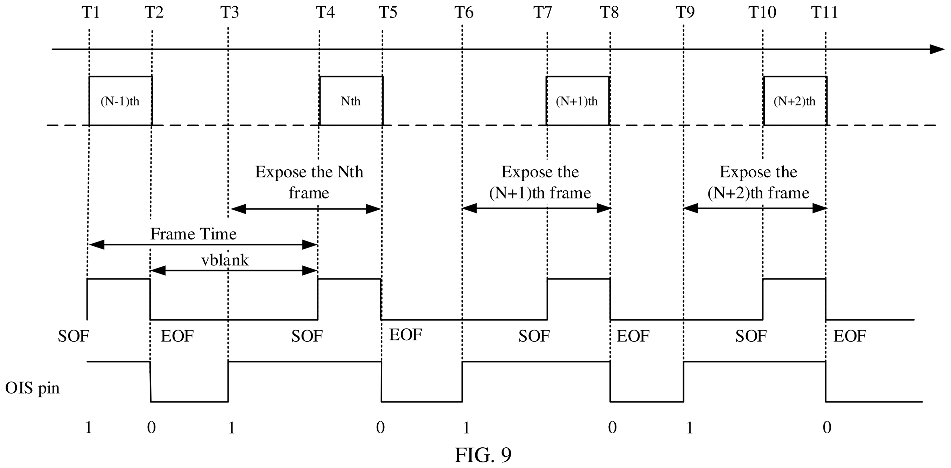

FIG. 9 is an example schematic diagram of a signal output. With reference to FIG. 9, in this embodiment of this application, an Nth frame is used as an example. At a moment, namely, a moment T3, at which a Sensor starts to expose the Nth frame, the Sensor outputs a first OIS pin signal (for example, a high level "1", which is not limited in this application) through a pin OIS pin, that is, a level of the pin OIS pin is pulled high.

For example, the Sensor exposes the Nth frame at moments T3~T5. Correspondingly, at the moments T3~T5, the pin OIS pin of the Sensor outputs the first OIS pin signal, that is, the pin OIS pin continuously outputs a high level.

At the moment T5, exposure of the Nth frame ends, and the Sensor outputs a second OIS pin signal (for example, a low level "0") through the pin, that is, the level of the pin OIS pin is pulled low.

At moments T5~T6, the Sensor exposes no image frame, and the OIS pin signal of the Sensor outputs the second OIS pin signal, that is, the pin OIS pin continuously outputs a low level.

At the moment T6, the Sensor starts to expose an (N+1)th frame, and the level of the pin OIS pin is pulled high, to indicate that the image frame starts to be exposed. Similar to the Nth frame, the Sensor may adjust the output signal of the pin OIS pin based on an exposure moment of the image frame.

It should be noted that each image frame may have same or different exposure duration.

Still with reference to FIG. 9, for example, the Sensor outputs an SOF signal (for example, a high level "1") through an SOF+EOF pin at a moment, for example, a moment T4, corresponding to a frame header of the image frame, to identify the frame header of the image frame. At a moment, for example, the moment T5, corresponding to a frame tail of the Nth frame, the Sensor outputs an EOF signal (for example, a low level "0") through the SOF+EOF pin, to identify the frame tail of the image frame. The SOF signal and the EOF signal in this embodiment of this application are merely examples, and are not limited in this application.

For example, a length (which means a time length) between an SOF of the Nth frame and a next SOF (namely, an SOF of the (N+1)th frame) is a Frame Time of the Nth frame. An effective length of the Nth frame is between the SOF and an EOF of the Nth frame, and vblank is between the EOF of the Nth frame and a next SOF (for the concepts, refer to the foregoing descriptions, and details are not described herein again).

In this embodiment of this application, a plurality of modules may monitor the SOF signal and the EOF signal output by the Sensor, to determine a frame header and a frame tail of an image frame based on the SOF signal and the EOF signal. For example, in this embodiment of this application, as shown in FIG. 8, an AP monitors the SOF+EOF pin of the Sensor, to obtain the SOF signal or the EOF signal output by the SOF+EOF pin of the Sensor. For example, at the moment T4, the AP may detect the SOF signal output by the SOF+EOF pin of the Sensor, and at the moment T5, the AP may detect the EOF signal output by the SOF+EOF pin of the Sensor.

For example, as described above, an exposure end moment of an image frame is aligned with an EOF of the image frame, that is, the exposure end moment of the image frame is the EOF of the image frame, for example, both are the moment T5. Therefore, in this embodiment of this application, a moment at which the level of the pin OIS pin is pulled low, the exposure end moment of the image frame, and a moment at which the Sensor starts to output the EOF signal are a same moment. For example, an exposure end moment of the Nth frame is the moment T5. At this moment, the Sensor outputs the second OIS pin signal (that is, the level of the pin is pulled low) through the OIS pin, and the Sensor outputs the EOF signal. It may be understood that in this embodiment of this application, that the level of the pin OIS pin of the Sensor is pulled low may be used to identify the EOF of the image frame and the exposure end moment of the image frame. Descriptions of another frame are the same as those of the Nth frame. Details are not described herein again.

For example, as shown in FIG. 8, an OIS monitors an output of the pin OIS pin of the Sensor. Correspondingly, the OIS may determine an exposure start moment, an exposure end moment, and an EOF of an image frame based on the level (or may be understood as an output signal) of the pin OIS pin of the Sensor.

For example, as shown in FIG. 9, the Nth frame is still used as an example. At the moment T3, when the OIS detects that the level of the pin OIS pin of the Sensor is pulled high, it may be determined that the Sensor starts to expose the Nth frame. When the OIS detects that the level of the pin OIS pin is maintained at a high level, it may be determined that the Sensor is exposing the Nth frame. At the moment T5, when the OIS detects that the level of the pin OIS pin of the Sensor is pulled low, it may be determined that the Sensor ends exposure of the Nth frame. In addition, it may be further determined that a current moment is the EOF of the Nth frame.

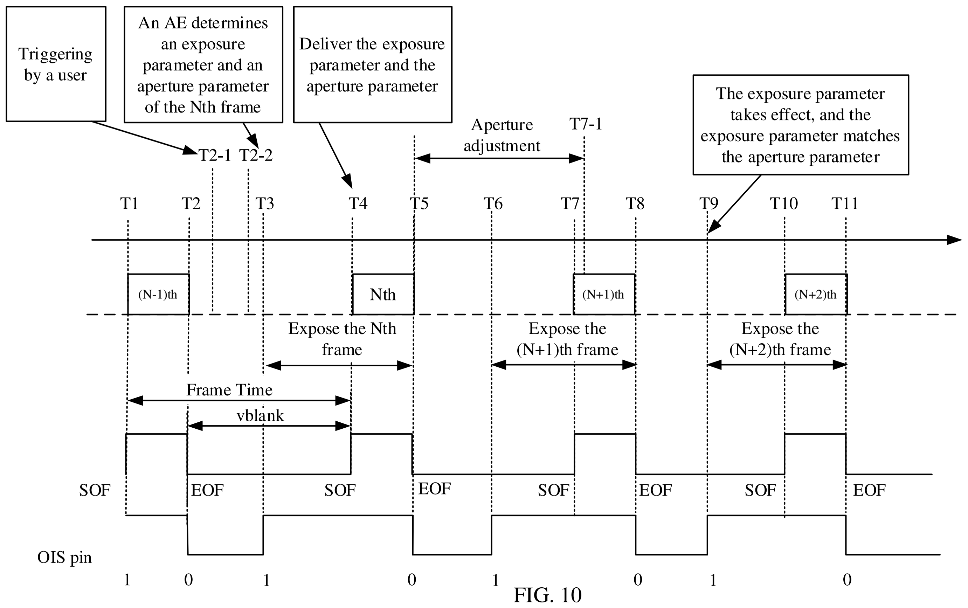

The photographing parameter setting method in the embodiments of this application is described in detail below with reference to an image frame exposure timing diagram shown in FIG. 10. With reference to FIG. 10, for example, it is assumed that at a moment T2-1, a user manually triggers aperture parameter adjustment. For a triggering manner, refer to FIG. 2A(1) and FIG. 2A(2). Details are not described herein again. Certainly, in this example, only a manual adjustment manner is used as an example for description, and a procedure may also be applied to a scenario of an automatic adjustment manner. This is not limited in this application.

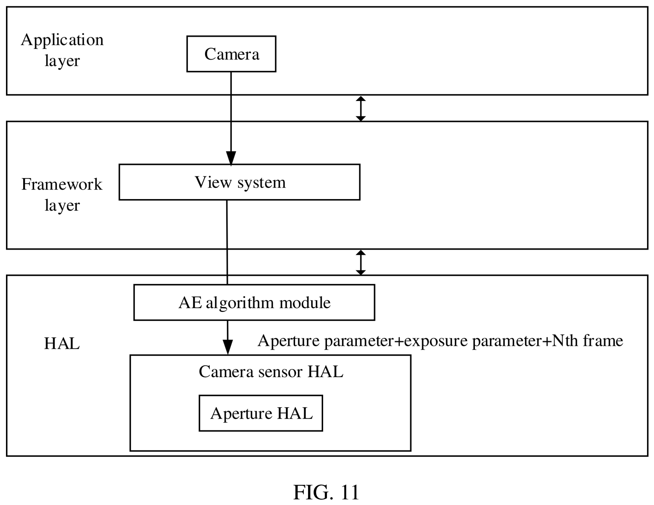

FIG. 11 is an example schematic diagram of module interaction. With reference to FIG. 11, a camera application sends adjustment indication information to a view system in response to a received user operation (namely, an aperture parameter adjustment operation performed by a user). The adjustment indication information may include but is not limited to aperture parameter adjustment indication information, the aperture parameter adjustment indication information includes a to-be-adjusted aperture parameter, for example, F1.4, and the aperture parameter adjustment indication information is used to indicate to adjust the aperture parameter.

For example, the view system delivers the to-be-adjusted aperture parameter to an AE algorithm module in response to the indication of the camera application. The AE algorithm module may determine an exposure parameter that matches the to-be-adjusted aperture parameter and a corresponding image frame. For example, as shown in FIG. 10, the camera application optionally receives a user-triggered operation at the moment T2-1, and performs the procedure in FIG. 11, so that the AE algorithm module obtains the to-be-adjusted aperture parameter. At a moment T2-2, the AE algorithm module may determine the corresponding exposure parameter and the image frame based on the to-be-adjusted aperture parameter. For example, the AE algorithm module may determine that the corresponding image frame is an Nth frame, the aperture parameter is F1.4, and the exposure parameter is an exposure parameter 2 (which are merely examples for description, and are not limited in this application).

It should be noted that a time interval between triggering by the user and determining of the exposure parameter by the AE algorithm is merely an example for description, and is not limited in this application.

It should be further noted that the image frame determined by the AE algorithm module is also an example for description. Usually, the image frame determined by the AE algorithm module may be a frame that is separated from a decision moment (for example, the moment T2-2) of the AE algorithm module by two image frames. For example, in FIG. 10, a current period is a period corresponding to an (N-1)th image frame, that is, between an SOF of the (N-1)th frame and a next SOF. Correspondingly, the AE algorithm module may allocate the new exposure parameter and the aperture parameter to an (N+1)th frame. In this embodiment of this application, only an example in which the AE algorithm module makes a decision for the Nth frame, that is, allocates the new exposure parameter and the aperture parameter to the Nth frame, is used for description.

Still with reference to FIG. 11, the AE algorithm module outputs the aperture parameter, the exposure parameter, and identification information of the Nth frame to a camera sensor HAL. Optionally, the identification information of the Nth frame is used to indicate that the AE algorithm module allocates the new aperture parameter and the exposure parameter to the Nth frame, or may be understood as that a camera component is to adjust the aperture parameter and the exposure parameter in the Nth frame.

It should be noted that in this embodiment of this application, adjustment of the aperture parameter and the exposure parameter includes two aspects: One is parameter delivery (meaning to deliver the parameter to the camera component), and the other is to enable the parameter to take effect. The exposure parameter is used as an example. The exposure parameter may be delivered to the camera component at a first moment (for example, a moment T4 in FIG. 10). However, the camera component enables the new exposure parameter to take effect after an interval of two frames (for example, a moment T9 in FIG. 10). In this embodiment of this application, a time between delivery of the exposure parameter and an effective moment may be understood as an exposure parameter adjustment time. This is the same for the aperture parameter. Details are not repeatedly described below.

Still with reference to FIG. 11, the camera sensor HAL obtains the aperture parameter, the exposure parameter, the identification information of the Nth frame, and the like that are input by the AE algorithm module, and determines that the aperture parameter and the exposure parameter of the Nth frame need to be adjusted. This may alternatively be understood as that the aperture parameter and the exposure parameter need to be adjusted in a Frame Time of the Nth frame.

For example, with reference to FIG. 10 and FIG. 11, after the moment T2-2 and before the moment T4, the camera sensor HAL obtains the aperture parameter, the exposure parameter, the identification information of the Nth frame, and the like that are input by the AE algorithm module.

For example, the camera sensor HAL caches the exposure parameter. In addition, the camera sensor HAL sends the aperture parameter to an aperture HAL. The aperture HAL caches the aperture parameters input by the camera sensor HAL.

For example, an electronic device exposes the Nth frame and at least one frame before the Nth frame based on an exposure parameter 1 and an aperture parameter 1, and displays an image of the exposed image frame in a corresponding display Frame Time. Details are not repeatedly described below.

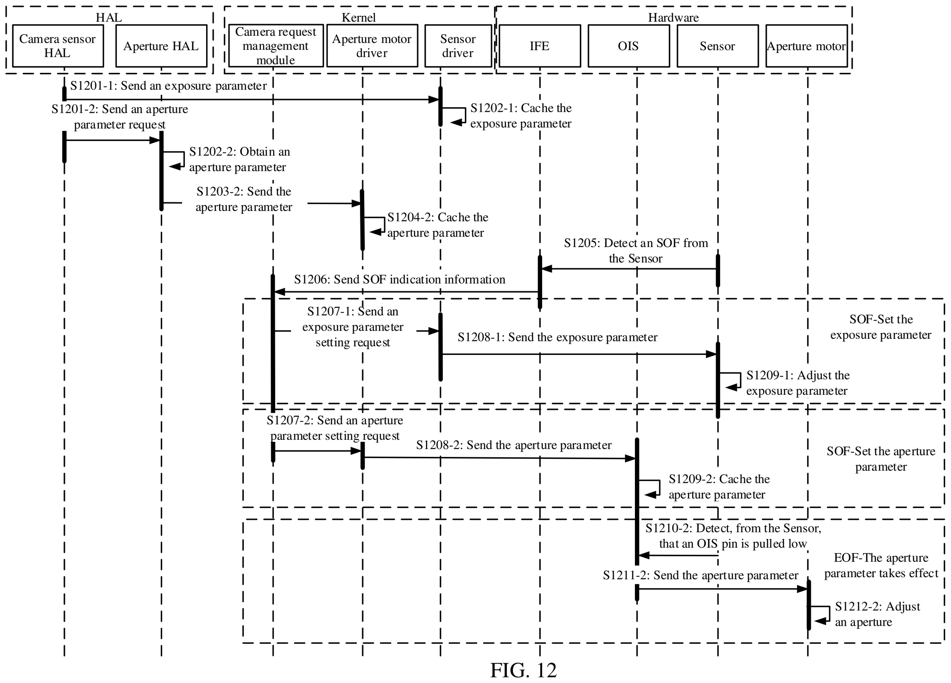

FIG. 12 is an example schematic flowchart of a photographing parameter setting method. With reference to FIG. 12, the method specifically includes but is not limited to the following steps.

S1201-1: The camera sensor HAL sends the exposure parameter to a Sensor driver.

For example, with reference to FIG. 10 and FIG. 11, after the moment T2-2 and before the moment T4, the camera sensor HAL obtains the aperture parameter, the exposure parameter, the identification information of the Nth frame, and the like that are input by the AE algorithm module.

The camera sensor HAL may start to perform S1201-1 and S1201-2 at any moment before the moment T4.

For example, the camera sensor HAL sends the exposure parameter and the identification information of the Nth frame to the Sensor driver, to indicate to update the exposure parameter in the Nth frame.

S1202-1: The Sensor driver caches the exposure parameter.

For example, the Sensor driver sends the exposure parameter and the identification information of the Nth frame.

In this embodiment of this application, after the Sensor driver caches the exposure parameter, the Sensor driver may determine, based on the identification information of the Nth frame, that the exposure parameter is set for the Nth frame. Therefore, after waiting for arrival (that is, S1205~S1207-1) of an SOF of the Nth frame, the Sensor driver sends the exposure parameter cached in this step to hardware (which is specifically a Sensor), to perform an exposure parameter delivery procedure.

S1201-2: The camera sensor HAL sends an aperture parameter request to the aperture HAL.

For example, the camera sensor HAL sends the aperture parameter request to the aperture HAL. The request may include the identification information of the Nth frame, and is used to indicate that aperture parameter update is to be triggered in the Nth frame.

It should be noted that there is no sequence of performing S1201-1 and S1201-2. This is not limited in this application.

S1202-2: The aperture HAL obtains the aperture parameter.

For example, as described above, the aperture HAL has obtained the aperture parameter sent by the camera sensor HAL, and the aperture HAL may extract the cached aperture parameter.

S1203-2: The aperture HAL sends the aperture parameter to an aperture motor driver.

For example, the aperture HAL invokes an aperture parameter method function, and converts the aperture parameter into a variable aperture parameter value (VA code) by using the method function.

The aperture HAL sends request information to a camera instruction delivery module. The request information includes the aperture parameter (namely, the VA code, which is not repeatedly described below) and the identification information of the Nth frame. The camera instruction delivery module forwards (or transparently transmits) the aperture parameter and the identification information of the Nth frame to the aperture motor driver.

S1204-2: The aperture motor driver caches the aperture parameter.

For example, the aperture motor caches the aperture parameter and the identification information of the Nth frame.

That is, with reference to FIG. 10, before the SOF, namely, the moment T4, of the Nth frame, the aperture motor driver has cached the aperture parameter, and the Sensor driver has cached the exposure parameter.

In this embodiment of this application, after the aperture motor driver caches the aperture parameter, the aperture motor driver may determine, based on the identification information of the Nth frame, that the aperture parameter is set for the Nth frame. Therefore, after waiting for arrival (that is, S1205~S1207-2) of the SOF of the Nth frame, the aperture motor driver sends the aperture parameter cached in this step to hardware (which is specifically an OIS), to perform an aperture parameter delivery procedure.

S1205: An IFE (Image Front End, image front end) detects the SOF from the Sensor.

For example, as shown in FIG. 8, an AP is physically connected to the Sensor. The IFE on an AP side may be configured to monitor an SOF+EOF pin of the Sensor.

Still with reference to FIG. 10, at the moment T4, the Sensor outputs an SOF signal through the SOF+EOF pin, to identify a frame header of the Nth frame.

By monitoring the SOF+EOF pin, the IFE detects that the Sensor outputs the SOF signal, and determines that a current moment (namely, the moment T4) is the frame header of the Nth frame.

S1206: The IFE sends SOF indication information to a camera request management module.

For example, after detecting the SOF signal of the Nth frame, the IFE sends the SOF indication information to the camera request management module, to indicate that the SOF of the Nth frame arrives. Specifically, the IFE may invoke an interface function of the camera request management module, to send an SOF identifier (a specific identifier may be set based on an actual requirement, and is not limited in this application) to the camera request management module.

For example, the AP side starts to perform an exposure parameter setting (or may be understood as exposure parameter delivery) procedure and an aperture parameter setting (or may be understood as aperture parameter delivery) procedure.

The exposure parameter setting procedure includes the following steps.

S1207-1: The camera request management module sends an exposure parameter setting request to the Sensor driver.

For example, after receiving the SOF indication information sent by the AP, the camera request management module determines that exposure parameter adjustment needs to be performed on the Nth frame. The camera request management module sends an exposure parameter delivery indication message (which may also be referred to as an exposure parameter setting request) to the Sensor driver. The indication message includes the identification information of the Nth frame and exposure parameter delivery indication information, and is used to indicate to deliver the exposure parameter.

It should be noted that the "deliver" action in this embodiment of this application means that a module on the AP side sends the exposure parameter or the aperture parameter to a corresponding hardware module, so that the hardware module executes the corresponding parameter. Details are not repeatedly described below.

S1208-1: The Sensor driver sends the exposure parameter to the Sensor.

For example, the Sensor driver extracts, in response to the indication of the camera request module, the exposure parameter corresponding to the identification information of the Nth frame cached in S1202-1.

The Sensor driver sends the exposure parameter to the Sensor.

S1209-1: The Sensor adjusts the exposure parameter.

For example, after receiving the exposure parameter, the Sensor adjusts the exposure parameter (or may be understood as "enables the exposure parameter to take effect") at a specified exposure moment of the image frame according to a protocol.

With reference to FIG. 10, in this embodiment of this application, at the moment T4, after obtaining the exposure parameter delivered by an upper layer (namely, the AP side), the Sensor enables the exposure parameter to take effect at an exposure moment (namely, the moment T9) of an (N+2)th frame based on an exposure parameter effective interval specified in the protocol. That is, at the moment T9, the Sensor exposes the (N+2)th frame based on a new exposure parameter (for example, an exposure parameter 2).

For example, at the moment T4, after the Sensor obtains the exposure parameter, the exposure parameter temporarily does not take effect. Therefore, at moments T6-T8, the Sensor exposes the (N+1)th frame based on an "old" exposure parameter (for example, the exposure parameter 1).

It should be noted that in this embodiment of this application, both the exposure parameter and the aperture parameter start to be delivered at the moment T4. However, due to duration corresponding to interaction between modules, there may be a specific delay between a time at which the hardware receives the exposure parameter and the aperture parameter and the moment T4 (namely, a parameter delivery time). Details are not repeatedly described below.

The aperture parameter setting procedure includes the following steps.

S1207-2: The camera request management module sends an aperture setting request to the aperture motor driver.

For example, after receiving the SOF indication information sent by the AP, the camera request management module determines that aperture parameter adjustment needs to be performed on the Nth frame. The camera request management module sends an aperture parameter delivery indication message (which may also be referred to as an aperture parameter setting request) to the aperture motor driver. The indication message includes the identification information of the Nth frame and aperture parameter delivery indication information, and is used to indicate to deliver the aperture parameter.

S1208-2: The aperture motor driver sends the aperture parameter to the OIS.

For example, the aperture motor driver extracts, in response to the indication of the camera request module, the aperture parameter corresponding to the identification information of the Nth frame cached in S 1204-2. The aperture motor driver sends the aperture parameter to the OIS.

S1209-2: The OIS caches the aperture parameter.

In this embodiment of this application, after receiving the aperture parameter, the OIS caches the aperture parameter in a specified location in a memory. The OIS waits for the EOF of the Nth frame to arrive before controlling the aperture motor to adjust the aperture.

For example, after the electronic device performs the aperture parameter setting procedure, in this embodiment of this application, the electronic device starts to adjust the aperture at a moment corresponding to the EOF of the image frame, that is, to enable the aperture parameter to take effect. An aperture effective procedure includes S1210-2~S1212-2.

S1210-2: The OIS detects, from the Sensor, that an OIS pin is pulled low.

For example, as shown in FIG. 8, the OIS is physically connected to the Sensor, and monitors the pin OIS pin of the Sensor. With reference to FIG. 10, starting from a moment T3, a level of the pin OIS pin is "high". This may alternatively be understood as that the Sensor outputs a first OIS pin signal (namely, a high level) through the pin OIS pin. At the moment T5, the Sensor identifies a frame tail of the Nth frame, outputs an EOF signal through the SOF+EOF pin, and outputs a second OIS pin signal (namely, a low level) through the pin OIS pin. Correspondingly, the level of the pin OIS pin is pulled low at the moment T5.

By monitoring the pin OIS pin, the OIS determines that the level of the pin OIS pin is pulled low, and may determine that the current moment is the EOF of the Nth frame.

S1211-2: The OIS sends the aperture parameter to the aperture motor.

For example, after detecting that the level of the pin OIS pin is pulled low, the OIS sends the aperture parameter to the aperture motor, to control the aperture motor to adjust an aperture of a lens.

S1212-2: The aperture motor adjusts the aperture.

For example, the aperture motor may adjust an aperture size based on the aperture parameter. Still with reference to FIG. 10, for example, at the EOF, namely, the moment T5, of the Nth frame, the OIS performs the aperture effective procedure, that is, delivers the aperture parameter to the aperture motor. The aperture motor starts to adjust the aperture size from the moment T5 (there may be a specific delay), and it needs to take approximately 20 ms to adjust the aperture size to a specified aperture size (namely, an aperture size corresponding to the aperture parameter). For example, occupied duration is moments T5~T7-1.

As described above, the exposure parameter is to take effect at the moment T9, and at the moments T6-T8, namely, in exposure duration of the (N+1)th frame, the Sensor still exposes the (N+1)th frame by using the "old" exposure parameter (for example, the exposure parameter 1). In addition, at moments T6~T7-1, the aperture is in a state of being adjusted. In addition, at moments T7-1~T8, the aperture has been adjusted to a new aperture parameter (for example, f1.4), and the aperture parameter does not match an exposure parameter (namely, the exposure parameter 1) currently corresponding to a moment of the (N+1)th frame. Therefore, at the moments T6-T8, namely, the exposure duration of the (N+1)th frame, the exposure parameter does not match the aperture parameter, and an image of the (N+1)th frame is abnormal. As described above, after the Sensor transmits the exposed (N+1)th frame to the AP side, the AP side discards the (N+1)th frame with exposure abnormality. Correspondingly, in a display Frame time corresponding to the (N+1)th frame, an "old" image frame, for example, a picture of the Nth frame, is displayed in a photographing preview interface of the electronic device.

Still with reference to FIG. 10, at the moment T9, the new exposure parameter (for example, the exposure parameter 2) takes effect, and the Sensor exposes the (N+2)th frame by using the new exposure parameter. In addition, because adjustment of the aperture parameter is completed at the moment T7-1, for example, the aperture is f1.4, the aperture parameter matches the current exposure parameter. Therefore, exposure of the (N+2)th frame is normal. Correspondingly, in a display Frame Time corresponding to the (N+2)th frame, a picture of the (N+2)th frame is displayed in the photographing preview interface of the electronic device.

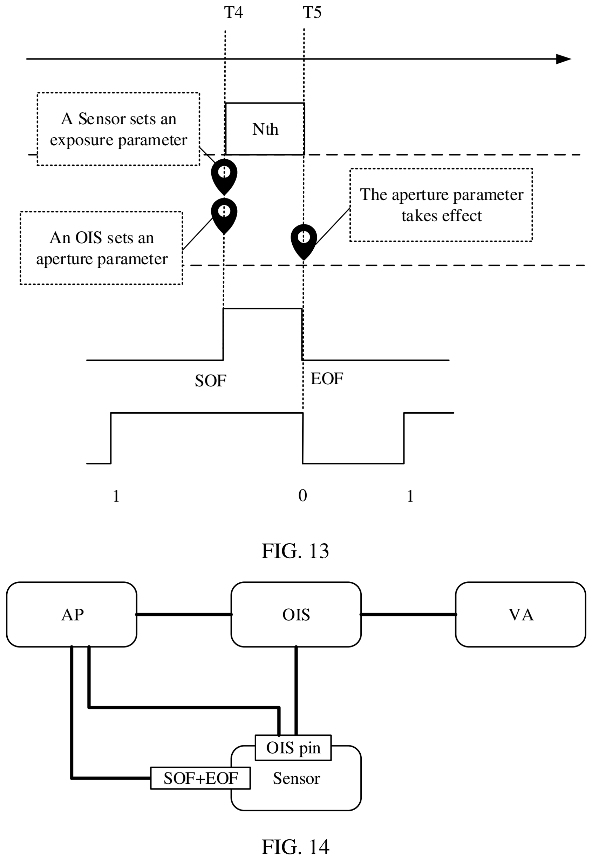

That is, in this embodiment of this application, as shown in FIG. 13, the electronic device sets (or may be understood as "delivers") the exposure parameter and the aperture parameter based on an SOF of an image frame (the Nth frame is used as an example), that is, at the SOF of the image frame, the Sensor obtains the exposure parameter and the OIS obtains the aperture parameter. In addition, the electronic device enables the aperture parameter to take effect based on an EOF of the image frame, that is, at the EOF of the image frame, the OIS controls the aperture motor to adjust the aperture size. Based on the manner in this embodiment of this application, exposure of only one image frame (for example, the (N+1)th frame) is affected, that is, the AP side discards only one image frame. Compared with the manner shown in FIG. 6 (that is, at least two image frames are discarded), this can effectively reduce impact of aperture adjustment on the image frame, thereby shortening picture freezing duration and improving user experience.

It should be noted that based on a current frame rate, a minimum Frame Time of the image frame is 33.3 ms. Therefore, the method in this embodiment of this application affects a maximum of one image frame.

FIG. 14 is an example schematic diagram of a hardware connection. With reference to FIG. 14, for example, an AP may further monitor an OIS pin interface of a Sensor through a hardware connection to the Sensor.

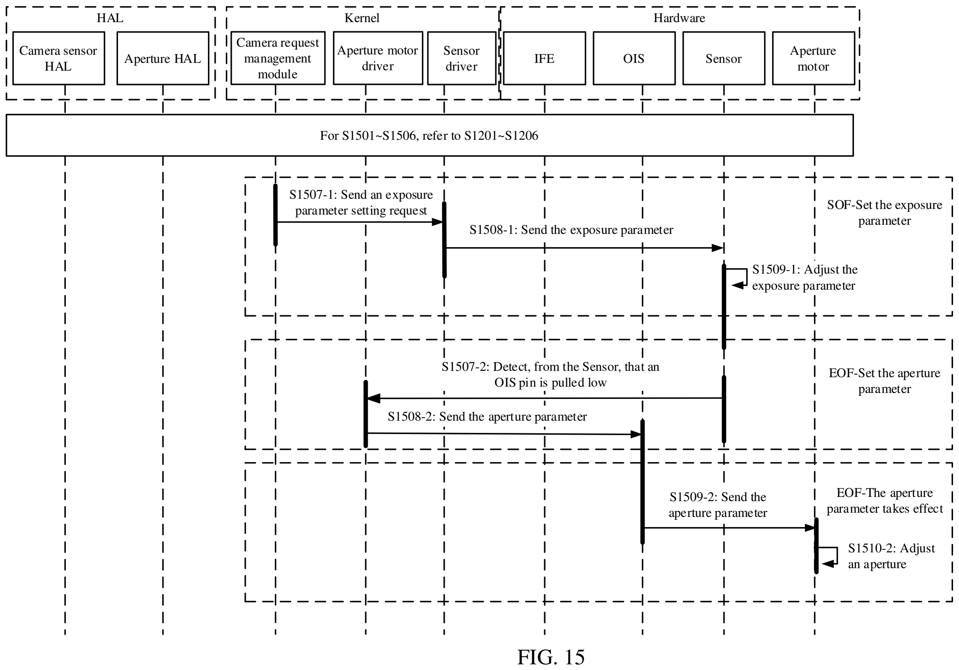

With reference to FIG. 14, FIG. 15 is an example schematic flowchart of a photographing parameter setting method. With reference to FIG. 15, the method specifically includes but is not limited to the following steps.

For S 1501~S1506, refer to S1201~S1206. Details are not described herein again.

For S1507-1~S1509-1, refer to S1207-1~S1209-1. Details are not described herein again.

S1507-2: The aperture motor driver detects, from the Sensor, that an OIS pin is pulled low.

For example, as shown in FIG. 14, an AP is physically connected to the Sensor, and monitors the pin OIS pin of the Sensor. With reference to FIG. 10, starting from a moment T3, a level of the pin OIS pin is "high". This may alternatively be understood as that the Sensor outputs a first OIS pin signal (namely, a high level) through the pin OIS pin. At the moment T5, the Sensor identifies a frame tail of the Nth frame, outputs an EOF signal through the SOF+EOF pin, and outputs a second OIS pin signal (namely, a low level) through the pin OIS pin. Correspondingly, the level of the pin OIS pin is pulled low at the moment T5.

By monitoring the pin OIS pin, the aperture motor driver in the AP determines that the level of the pin OIS pin is pulled low, and may determine that the current moment is the EOF of the Nth frame.

S1508-2: The aperture motor driver sends the aperture parameter to the OIS.

For example, the aperture motor driver extracts, in response to detecting that the level of the pin OIS pin is pulled low, the aperture parameter corresponding to the identification information of the Nth frame cached in S1504-2. The aperture motor driver sends the aperture parameter to the OIS.

S1509-2: The OIS sends the aperture parameter to an aperture motor.

For example, after receiving the aperture parameter sent by the aperture motor, the OIS sends the aperture parameter to the aperture motor, to control the aperture motor to adjust an aperture of a lens.

S1510-2: The aperture motor adjusts the aperture.

For specific descriptions, refer to S 1212-2. Details are not described herein again.

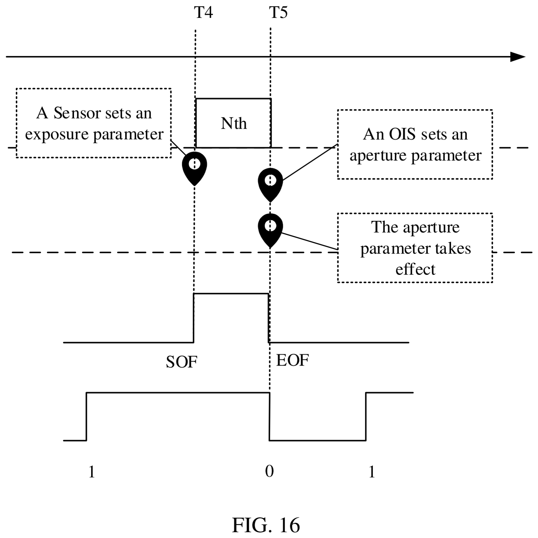

As shown in FIG. 16, in the example shown in FIG. 15, the electronic device sets (or may be understood as "delivers") the exposure parameter based on an SOF of an image frame (the Nth frame is used as an example), that is, at the SOF of the image frame, the Sensor obtains the exposure parameter. In addition, the electronic device sets the aperture parameter based on an EOF of the image frame, that is, the OIS obtains the aperture parameter, and the electronic device sets the aperture parameter to take effect based on the EOF of the image frame, that is, at the EOF of the image frame, the OIS controls the aperture motor to adjust the aperture size. Based on the manner in this embodiment of this application, exposure of only one image frame (for example, the (N+1)th frame) is affected, that is, the AP side discards only one image frame. Compared with the manner shown in FIG. 6 (that is, at least two image frames are discarded), this can effectively reduce impact of aperture adjustment on the image frame, thereby shortening picture freezing duration and improving user experience.

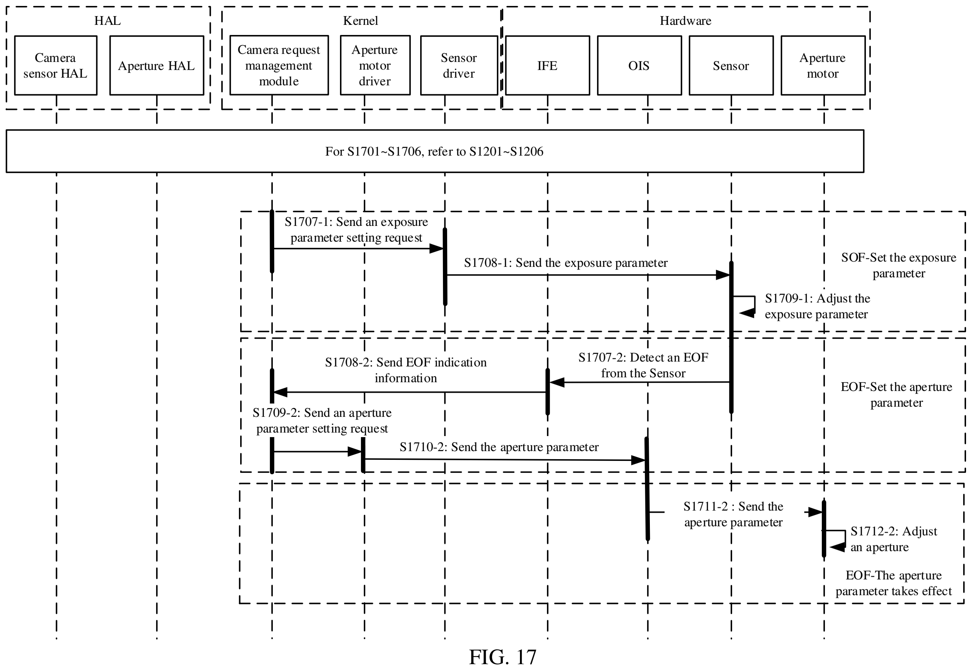

In this embodiment of this application, the IFE on the AP side may further trigger the aperture motor driver based on a detected EOF signal, to perform an aperture parameter setting procedure. FIG. 17 is an example schematic flowchart of a photographing parameter setting method. With reference to FIG. 17, the method specifically includes but is not limited to the following steps.

For S1701~S1706, refer to S1201~S1206. Details are not described herein again.

For S1707-1~S1709-1, refer to S1207-1~S1209-1. Details are not described herein again.

S1707-2: The IFE detects an EOF from the Sensor.

For example, as shown in FIG. 8, an AP is physically connected to the Sensor. The IFE on an AP side may be configured to monitor an SOF+EOF pin of the Sensor.

Still with reference to FIG. 10, at the moment T4, the Sensor outputs an SOF signal through the SOF+EOF pin, to identify a frame header of the Nth frame.

By monitoring the SOF+EOF pin, the IFE detects that the Sensor outputs the SOF signal, and determines that a current moment (namely, the moment T4) is the frame header of the Nth frame.

S1708-2: The IFE sends EOF indication information to a camera request management module.

For example, after detecting an EOF signal of the Nth frame, the IFE sends the EOF indication information to the camera request management module, to indicate that the EOF of the Nth frame arrives. Specifically, the IFE may invoke an interface function of the camera request management module, to send an EOF identifier (a specific identifier may be set based on an actual requirement, and is not limited in this application) to the camera request management module.

S1709-2: The camera request management module sends an aperture setting request to the aperture motor driver.

For example, after receiving the EOF indication information sent by the AP, the camera request management module determines that aperture parameter adjustment needs to be performed on the Nth frame. The camera request management module sends an aperture parameter delivery indication message (which may also be referred to as an aperture parameter setting request) to the aperture motor driver. The indication message includes the identification information of the Nth frame and aperture parameter delivery indication information, and is used to indicate to deliver the aperture parameter.

S1710-2: The aperture motor driver sends the aperture parameter to the OIS.

For example, the aperture motor driver extracts, in response to the indication of the camera request module, the aperture parameter corresponding to the identification information of the Nth frame cached in S 1204-2. The aperture motor driver sends the aperture parameter to the OIS.

S1711-2: The OIS sends the aperture parameter to an aperture motor.

For example, the OIS sends the aperture parameter to the aperture motor in response to the aperture parameter sent by the aperture motor driver, to control the aperture motor to adjust an aperture of a lens.

S1712-2: The aperture motor adjusts the aperture.

For specific descriptions, refer to S 1212-2. Details are not described herein again.

As shown in FIG. 16, in the example shown in FIG. 17, the electronic device sets (or may be understood as "delivers") the exposure parameter based on an SOF of an image frame (the Nth frame is used as an example), that is, at the SOF of the image frame, the Sensor obtains the exposure parameter. In addition, the AP side may set the aperture parameter based on an EOF of the image frame by monitoring an EOF signal, that is, the OIS obtains the aperture parameter, and set the aperture parameter to take effect based on the EOF of the image frame, that is, at the EOF of the image frame, the OIS controls the aperture motor to adjust the aperture size. Based on the manner in this embodiment of this application, exposure of only one image frame (for example, the (N+1)th frame) is affected, that is, the AP side discards only one image frame. Compared with the manner shown in FIG. 6 (that is, at least two image frames are discarded), this can effectively reduce impact of aperture adjustment on the image frame, thereby shortening picture freezing duration and improving user experience.

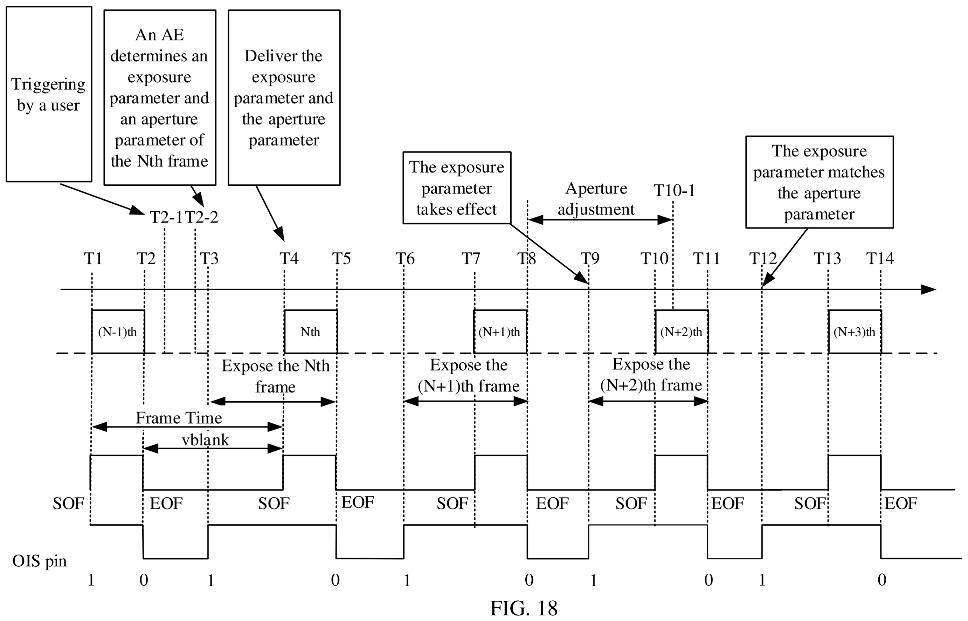

In the foregoing examples, the aperture parameter starts to be adjusted based on the EOF of the Nth frame. In a possible implementation, the electronic device may alternatively start to adjust the aperture parameter based on an EOF of the (N+1)th frame. FIG. 18 is an example schematic image frame exposure timing diagram. With reference to FIG. 18, specifically, for triggering by a user and determining of an exposure parameter and an aperture parameter of an Nth frame by an AE, refer to FIG. 10, FIG. 12, FIG. 15, and FIG. 17. Details are not described herein again.

Still with reference to FIG. 18, at an SOF, namely, a moment T4, of the Nth frame, the exposure parameter and the aperture parameter are sent to hardware. The example in FIG. 12 is used as an example. An electronic device performs S1205~1206, S1207-1~S1209-1, and S127-2~S51209-2. That is, in this example, the exposure parameter is delivered to the Sensor at the SOF of the Nth frame, and the exposure parameter takes effect at an exposure moment (for example, a moment T9) of an (N+2)th frame. For specific descriptions, refer to the foregoing descriptions. Details are not described herein again. Still with reference to FIG. 18, at a moment T5, an OIS detects that an OIS pin is pulled low, determines an EOF of the Nth frame, and performs no processing. At a moment T8, the OIS detects again that the OIS pin is pulled low, and determines an EOF corresponding to an (N+1)th frame. The hardware starts to perform S1210-2~S1212-2 to adjust an aperture. Still with reference to FIG. 18, an aperture component starts to adjust the aperture from the EOF of the (N+1)th frame, namely, the moment T8 (there may be a specific delay), until adjustment is completed at a moment T10-1. In this example, exposure parameters of the Nth frame and the (N+1)th frame are the same, and aperture parameters are the same. During exposure of the (N+2)th frame, the aperture is being adjusted at moments T8~T10-1. Therefore, the aperture parameter does not match the exposure parameter (for a specific reason, refer to the foregoing descriptions, and details are not described herein again). Therefore, an AP side discards the (N+2)th frame. That is, in a display Frame Time corresponding to the (N+2)th frame (or may be understood as display duration of the (N+2)th frame), an image corresponding to the (N+1)th frame is displayed. In this example, because exposure parameters and aperture parameters corresponding to the Nth frame, the (N+1)th frame, and at least one previous frame match each other, an image corresponding to the image frame may be displayed in a corresponding display Frame Time. For example, the image corresponding to the (N+1)th frame is displayed in a display Frame Time of the (N+1)th frame. The image corresponding to the (N+1)th frame is obtained after exposure based on an exposure parameter 1 and an aperture parameter 1. Details are not repeatedly described below. During exposure of an (N+3)th frame (that is, starting from a moment T12), adjustment of the aperture parameter is completed and the exposure parameter takes effect. Therefore, the aperture parameter matches the exposure parameter. Correspondingly, an image corresponding to the (N+3)th frame is displayed in a display Frame Time corresponding to the (N+)th frame. For an undescribed part, refer to FIG. 12~FIG. 13. Details are not described herein again.

The example in FIG. 15 is used as an example. An electronic device performs S1507-1~S1509-1. At a moment T5, an aperture motor driver detects that an OIS pin is pulled low, determines an EOF corresponding to the Nth frame, and does not perform processing. At a moment T8, the aperture motor driver detects again that the OIS pin is pulled low, and determines an EOF corresponding to an (N+1)th frame. The hardware starts to perform S1507-2~S1509-2 to adjust an aperture. Still with reference to FIG. 18, an aperture component starts to adjust the aperture from the EOF of the (N+1)th frame, namely, the moment T8 (there may be a specific delay), until adjustment is completed at a moment T10-1. In this example, exposure parameters of the Nth frame and the (N+1)th frame are the same, and aperture parameters are the same. During exposure of the (N+2)th frame, the aperture is being adjusted at moments T8~T10-1. Therefore, the aperture parameter does not match the exposure parameter (for a specific reason, refer to the foregoing descriptions, and details are not described herein again). Therefore, an AP side discards the (N+2)th frame. During exposure of an (N+3)th frame (that is, starting from a moment T12), adjustment of the aperture parameter is completed and the exposure parameter takes effect. Therefore, the aperture parameter matches the exposure parameter. For an undescribed part, refer to FIG. 14~FIG. 16. Details are not described herein again.

The example in FIG. 17 is used as an example. An electronic device performs S1707-1-S1709-1. At a moment T5, an IFE detects that an OIS pin is pulled low, determines an EOF corresponding to the Nth frame, and does not perform processing. At a moment T8, the IFE detects again that the OIS pin is pulled low, and determines an EOF corresponding to an (N+1)th frame. The electronic device starts to perform S1707-2~S1712-2 to adjust an aperture. Still with reference to FIG. 18, an aperture component starts to adjust the aperture from the EOF of the (N+1)th frame, namely, the moment T8 (there may be a specific delay), until adjustment is completed at a moment T10-1. In this example, exposure parameters of the Nth frame and the (N+1)th frame are the same, and aperture parameters are the same. During exposure of the (N+2)th frame, the aperture is being adjusted at moments T8~T10-1. Therefore, the aperture parameter does not match the exposure parameter (for a specific reason, refer to the foregoing descriptions, and details are not described herein again). Therefore, an AP side discards the (N+2)th frame. During exposure of an (N+3)th frame (that is, starting from a moment T12), adjustment of the aperture parameter is completed and the exposure parameter takes effect. Therefore, the aperture parameter matches the exposure parameter. For an undescribed part, refer to FIG. 17. Details are not described herein again.

It may be understood that to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint of the technical solutions. Persons skilled in the art may use different methods to implement the described functions with reference to embodiments for each particular application, but it should not be considered that the implementation goes beyond the scope of this application.

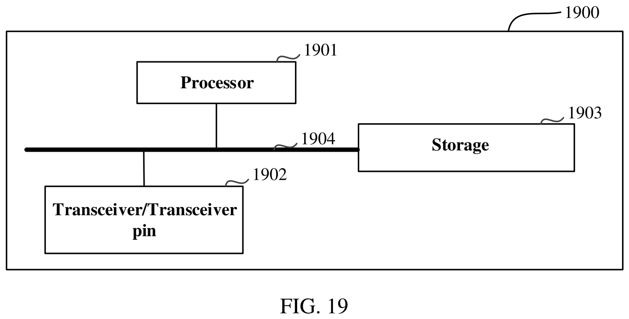

In an example, FIG. 19 is a schematic block diagram of an apparatus 1900 according to an embodiment of this application. The apparatus 1900 may include a processor 1901 and a transceiver/transceiver pin 1902. Optionally, a storage 1903 is further included.

Components in the apparatus 1900 are coupled together through a bus 1904. In addition to a data bus, the bus 1904 further includes a power bus, a control bus, and a status signal bus. However, for clarity of description, various buses are referred to as the bus 1904 in the figure.

Optionally, the storage 1903 may be used for instructions in the foregoing method embodiments. The processor 1901 may be configured to: execute the instructions in the storage 1903, control a receive pin to receive a signal, and control a transmit pin to send a signal.

The apparatus 1900 may be the electronic device or a chip in the electronic device in the foregoing method embodiments.

All related content of the steps in the foregoing method embodiments may be cited to function descriptions of corresponding functional modules. Details are not described herein again.

An embodiment further provides a computer storage medium. The computer storage medium stores computer instructions. When the computer instructions are run on an electronic device, the electronic device is enabled to perform the foregoing related method steps to implement the method in the foregoing embodiments.

An embodiment further provides a computer program product. When the computer program product runs on a computer, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a storage that are connected to each other. The storage is configured to store computer-executable instructions. When the apparatus runs, the processor may execute the computer-executable instructions stored in the storage, so that the chip performs the method in the foregoing method embodiments.

The electronic device, the computer storage medium, the computer program product, or the chip provided in the embodiments is configured to perform the corresponding method provided above. Therefore, for beneficial effects that can be achieved by the electronic device, the computer storage medium, the computer program product, or the chip, refer to the beneficial effects in the corresponding method provided above. Details are not described herein again.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. A photographing parameter setting method, applied to an electronic device, wherein the method comprises:
obtaining a first exposure parameter and a first aperture parameter of an Nth frame at a first moment;
delivering the first exposure parameter to a camera sensor at a second moment, wherein starting from an (N+2)th frame, the camera sensor performs exposure based on the first exposure parameter; and
adjusting, by the aperture component, an aperture based on the first aperture parameter at a third moment, wherein
the first moment is before the second moment, the second moment is a moment corresponding to a start of frame delimiter SOF of the Nth frame, and the third moment is a moment corresponding to an end of frame delimiter EOF of the Nth frame.

2. The method according to claim 1, wherein the method further comprises:
displaying an image corresponding to the (N+2)th frame based on the first exposure parameter and the first aperture parameter in display duration corresponding to the (N+2)th frame.

3. The method according to claim 2, wherein the method further comprises:
displaying an image corresponding to the Nth frame based on a second exposure parameter and a second aperture parameter in display duration corresponding to the Nth frame, wherein the second exposure parameter is different from the first exposure parameter, and the second aperture parameter is different from the first aperture parameter; and
displaying the image corresponding to the Nth frame in display duration corresponding to the (N+1)th frame.

4. The method according to claim 1, wherein the obtaining a first exposure parameter and a first aperture parameter of an Nth frame at a first moment comprises:
obtaining the first exposure parameter and the first aperture parameter in response to a received user operation;
determining, through an automatic exposure module, that the first exposure parameter and the first aperture parameter act on the Nth frame; and
caching the first exposure parameter and the first aperture parameter in a camera driver.

5. The method according to claim 4, wherein the delivering the first exposure parameter to a camera sensor at a second moment comprises:
at the second moment, in response to a first SOF signal output by the camera sensor, indicating, by an image front end IFE module, the camera driver to send the first exposure parameter to the camera sensor, wherein the first SOF signal is used to indicate the SOF of the Nth frame, wherein
in response to the received first exposure parameter, starting from the (N+2)th frame, the camera sensor performs exposure based on the first exposure parameter.

6. The method according to claim 5, wherein the adjusting, by the aperture component, an aperture based on the first aperture parameter at a third moment comprises:
at the second moment, in response to the first SOF signal output by the camera sensor, indicating, by the IFE module, the camera driver to send the first aperture parameter to an optical image stabilization OIS module;
receiving, by the OIS module, the first aperture parameter sent by the camera driver; and
at the third moment, obtaining, by the OIS module, a first OIS pin signal output by the camera sensor, and sending the first aperture parameter to the aperture component, and adjusting, by the aperture component, the aperture based on the first aperture parameter, wherein the first OIS pin signal is used to indicate the EOF of the Nth frame.

7. The method according to claim 5, wherein the adjusting, by the aperture component, an aperture based on the first aperture parameter at a third moment comprises:
at the third moment, obtaining, by the camera driver, a first OIS pin signal output by the camera sensor, and sending the first aperture parameter to an OIS module; and
sending, by the OIS module, the first aperture parameter to the aperture component in response to the first aperture parameter sent by the camera driver, and adjusting, by the aperture component, the aperture based on the first aperture parameter, wherein the first OIS pin signal is used to indicate the EOF of the Nth frame.

8. The method according to claim 5, wherein the adjusting, by the aperture component, an aperture based on the first aperture parameter at a third moment comprises:
at the third moment, in response to a first EOF signal output by the camera sensor, indicating, by the IFE module, the camera driver to send the first aperture parameter to an OIS module, wherein the first EOF signal is used to indicate the EOF of the Nth frame; and
sending, by the OIS module, the first aperture parameter to the aperture component in response to the first aperture parameter sent by the camera driver, and adjusting, by the aperture component, the aperture based on the first aperture parameter.

9. A photographing parameter setting method, applied to an electronic device, wherein the method comprises:
obtaining a first exposure parameter and a first aperture parameter of an Nth frame at a first moment;
delivering the first exposure parameter to a camera sensor at a second moment, wherein starting from an (N+2)th frame, the camera sensor performs exposure based on the first exposure parameter; and
adjusting, by the aperture component, an aperture based on the first aperture parameter at a third moment, wherein
the first moment is before the second moment, the second moment is a moment corresponding to a start of frame delimiter SOF of the Nth frame, and the third moment is a moment corresponding to an end of frame delimiter EOF of an (N+1)th frame.

10. The method according to claim 9, wherein the method further comprises:
displaying an image corresponding to an (N+3)th frame based on the first exposure parameter and the first aperture parameter in display duration corresponding to the (N+3)th frame.

11. The method according to claim 10, wherein the method further comprises:
displaying an image corresponding to the Nth frame based on a second exposure parameter and a second aperture parameter in display duration corresponding to the Nth frame, wherein the second exposure parameter is different from the first exposure parameter, and the second aperture parameter is different from the first aperture parameter;
displaying an image corresponding to the (N+1)th frame based on the second exposure parameter and the second aperture parameter in display duration corresponding to the (N+1)th frame; and
displaying the image corresponding to the (N+1)th frame in display duration corresponding to the (N+2)th frame.

12. The method according to claim 9, wherein the obtaining a first exposure parameter and a first aperture parameter of an Nth frame at a first moment comprises:
obtaining the first exposure parameter and the first aperture parameter in response to a received user operation;
determining, through an automatic exposure module, that the first exposure parameter and the first aperture parameter act on the Nth frame; and
caching the first exposure parameter and the first aperture parameter in a camera driver.

13. The method according to claim 12, wherein the delivering the first exposure parameter to a camera sensor at a second moment comprises:
at the second moment, in response to a first SOF signal output by the camera sensor, indicating, by an image front end IFE module, the camera driver to send the first exposure parameter to the camera sensor, wherein the first SOF signal is used to indicate the SOF of the Nth frame, wherein
in response to the received first exposure parameter, starting from the (N+2)th frame, the camera sensor performs exposure based on the first exposure parameter.

14. The method according to claim 13, wherein the adjusting, by the aperture component, an aperture based on the first aperture parameter at a third moment comprises:
at the second moment, in response to the first SOF signal output by the camera sensor, indicating, by the IFE module, the camera driver to send the first aperture parameter to an optical image stabilization OIS module;
receiving, by the OIS module, the first aperture parameter sent by the camera driver; and
at the third moment, obtaining, by the OIS module, a first OIS pin signal output by the camera sensor, and sending the first aperture parameter to the aperture component, and adjusting, by the aperture component, the aperture based on the first aperture parameter, wherein the first OIS pin signal is used to indicate the EOF of the (N+1)th frame.

15. The method according to claim 13, wherein the adjusting, by the aperture component, an aperture based on the first aperture parameter at a third moment comprises:
at the third moment, obtaining, by the camera driver, a first OIS pin signal output by the camera sensor, and sending the first aperture parameter to an OIS module; and
sending, by the OIS module, the first aperture parameter to the aperture component in response to the first aperture parameter sent by the camera driver, and adjusting, by the aperture component, the aperture based on the first aperture parameter, wherein the first OIS pin signal is used to indicate the EOF of the (N+1)th frame.

16. The method according to claim 13, wherein the adjusting, by the aperture component, an aperture based on the first aperture parameter at a third moment comprises:
at the third moment, in response to a first EOF signal output by the camera sensor, indicating, by the IFE module, the camera driver to send the first aperture parameter to an OIS module, wherein the first EOF signal is used to indicate the EOF of the (N+1)th frame; and
sending, by the OIS module, the first aperture parameter to the aperture component in response to the first aperture parameter sent by the camera driver, and adjusting, by the aperture component, the aperture based on the first aperture parameter.

17. An electronic device, comprising:
one or more processors, a storage, and
one or more computer programs, wherein the one or more computer programs are stored in the storage, and when the computer programs are executed by the one or more processors, the electronic device is enabled to perform the following steps:
obtaining a first exposure parameter and a first aperture parameter of an Nth frame at a first moment;
delivering the first exposure parameter to a camera sensor at a second moment, wherein starting from an (N+2)th frame, the camera sensor performs exposure based on the first exposure parameter; and
adjusting, by the aperture component, an aperture based on the first aperture parameter at a third moment, wherein
the first moment is before the second moment, the second moment is a moment corresponding to a start of frame delimiter SOF of the Nth frame, and the third moment is a moment corresponding to an end of frame delimiter EOF of the Nth frame.

18. The electronic device according to claim 17, wherein when the computer programs are executed by the one or more processors, the electronic device is enabled to perform the following step:
displaying an image corresponding to the (N+2)th frame based on the first exposure parameter and the first aperture parameter in display duration corresponding to the (N+2)th frame.

19. The electronic device according to claim 18, wherein when the computer programs are executed by the one or more processors, the electronic device is enabled to perform the following steps:
displaying an image corresponding to the Nth frame based on a second exposure parameter and a second aperture parameter in display duration corresponding to the Nth frame, wherein the second exposure parameter is different from the first exposure parameter, and the second aperture parameter is different from the first aperture parameter; and
displaying the image corresponding to the Nth frame in display duration corresponding to the (N+1)th frame.

20. The electronic device according to claim 17, wherein when the computer programs are executed by the one or more processors, the electronic device is enabled to perform the following steps:
obtaining the first exposure parameter and the first aperture parameter in response to a received user operation;
determining, through an automatic exposure module, that the first exposure parameter and the first aperture parameter act on the Nth frame; and
caching the first exposure parameter and the first aperture parameter in a camera driver.

21. The electronic device according to claim 20, wherein when the computer programs are executed by the one or more processors, the electronic device is enabled to perform the following step:
at the second moment, in response to a first SOF signal output by the camera sensor, indicating, by an image front end IFE module, the camera driver to send the first exposure parameter to the camera sensor, wherein the first SOF signal is used to indicate the SOF of the Nth frame, wherein
in response to the received first exposure parameter, starting from the (N+2)th frame, the camera sensor performs exposure based on the first exposure parameter.

22. The electronic device according to claim 21, wherein when the computer programs are executed by the one or more processors, the electronic device is enabled to perform the following steps:
at the second moment, in response to the first SOF signal output by the camera sensor, indicating, by the IFE module, the camera driver to send the first aperture parameter to an optical image stabilization OIS module;
receiving, by the OIS module, the first aperture parameter sent by the camera driver; and
at the third moment, obtaining, by the OIS module, a first OIS pin signal output by the camera sensor, and sending the first aperture parameter to the aperture component, and adjusting, by the aperture component, the aperture based on the first aperture parameter, wherein the first OIS pin signal is used to indicate the EOF of the Nth frame.

23. The electronic device according to claim 21, wherein when the computer programs are executed by the one or more processors, the electronic device is enabled to perform the following steps:
at the third moment, obtaining, by the camera driver, a first OIS pin signal output by the camera sensor, and sending the first aperture parameter to an OIS module; and
sending, by the OIS module, the first aperture parameter to the aperture component in response to the first aperture parameter sent by the camera driver, and adjusting, by the aperture component, the aperture based on the first aperture parameter, wherein the first OIS pin signal is used to indicate the EOF of the Nth frame.

24. The electronic device according to claim 21, wherein when the computer programs are executed by the one or more processors, the electronic device is enabled to perform the following steps:
at the third moment, in response to a first EOF signal output by the camera sensor, indicating, by the IFE module, the camera driver to send the first aperture parameter to an OIS module, wherein the first EOF signal is used to indicate the EOF of the Nth frame; and
sending, by the OIS module, the first aperture parameter to the aperture component in response to the first aperture parameter sent by the camera driver, and adjusting, by the aperture component, the aperture based on the first aperture parameter.

25. An electronic device, comprising:
one or more processors, a storage, and
one or more computer programs, wherein the one or more computer programs are stored in the storage, and when the computer programs are executed by the one or more processors, the electronic device is enabled to perform the following steps:
obtaining a first exposure parameter and a first aperture parameter of an Nth frame at a first moment;
delivering the first exposure parameter to a camera sensor at a second moment, wherein starting from an (N+2)th frame, the camera sensor performs exposure based on the first exposure parameter; and
adjusting, by the aperture component, an aperture based on the first aperture parameter at a third moment, wherein
the first moment is before the second moment, the second moment is a moment corresponding to a start of frame delimiter SOF of the Nth frame, and the third moment is a moment corresponding to an end of frame delimiter EOF of an (N+1)th frame.

26. The electronic device according to claim 25, wherein when the computer programs are executed by the one or more processors, the electronic device is enabled to perform the following step:
displaying an image corresponding to an (N+3)th frame based on the first exposure parameter and the first aperture parameter in display duration corresponding to the (N+3)th frame.

27. The electronic device according to claim 26, wherein when the computer programs are executed by the one or more processors, the electronic device is enabled to perform the following steps:
displaying an image corresponding to the Nth frame based on a second exposure parameter and a second aperture parameter in display duration corresponding to the Nth frame, wherein the second exposure parameter is different from the first exposure parameter, and the second aperture parameter is different from the first aperture parameter;
displaying an image corresponding to the (N+1)th frame based on the second exposure parameter and the second aperture parameter in display duration corresponding to the (N+1)th frame; and
displaying the image corresponding to the (N+1)th frame in display duration corresponding to the (N+2)th frame.

28. The electronic device according to claim 27, wherein when the computer programs are executed by the one or more processors, the electronic device is enabled to perform the following steps:
obtaining the first exposure parameter and the first aperture parameter in response to a received user operation;
determining, through an automatic exposure module, that the first exposure parameter and the first aperture parameter act on the Nth frame; and
caching the first exposure parameter and the first aperture parameter in a camera driver.

29. The electronic device according to claim 28, wherein when the computer programs are executed by the one or more processors, the electronic device is enabled to perform the following step:
at the second moment, in response to a first SOF signal output by the camera sensor, indicating, by an image front end IFE module, the camera driver to send the first exposure parameter to the camera sensor, wherein the first SOF signal is used to indicate the SOF of the Nth frame, wherein
in response to the received first exposure parameter, starting from the (N+2)th frame, the camera sensor performs exposure based on the first exposure parameter.

30. The electronic device according to claim 29, wherein when the computer programs are executed by the one or more processors, the electronic device is enabled to perform the following steps:
at the second moment, in response to the first SOF signal output by the camera sensor, indicating, by the IFE module, the camera driver to send the first aperture parameter to an optical image stabilization OIS module;
receiving, by the OIS module, the first aperture parameter sent by the camera driver; and
at the third moment, obtaining, by the OIS module, a first OIS pin signal output by the camera sensor, and sending the first aperture parameter to the aperture component, and adjusting, by the aperture component, the aperture based on the first aperture parameter, wherein the first OIS pin signal is used to indicate the EOF of the (N+1)th frame.

31. The electronic device according to claim 29, wherein when the computer programs are executed by the one or more processors, the electronic device is enabled to perform the following steps:
at the third moment, obtaining, by the camera driver, a first OIS pin signal output by the camera sensor, and sending the first aperture parameter to an OIS module; and
sending, by the OIS module, the first aperture parameter to the aperture component in response to the first aperture parameter sent by the camera driver, and adjusting, by the aperture component, the aperture based on the first aperture parameter, wherein the first OIS pin signal is used to indicate the EOF of the (N+1)th frame.

32. The electronic device according to claim 29, wherein the adjusting, by the aperture component, an aperture based on the first aperture parameter at a third moment comprises:
at the third moment, in response to a first EOF signal output by the camera sensor, indicating, by the IFE module, the camera driver to send the first aperture parameter to an OIS module, wherein the first EOF signal is used to indicate the EOF of the (N+1)th frame; and
sending, by the OIS module, the first aperture parameter to the aperture component in response to the first aperture parameter sent by the camera driver, and adjusting, by the aperture component, the aperture based on the first aperture parameter.

33. A computer storage medium, comprising computer instructions, wherein when the computer instructions are run on an electronic device, the electronic device is enabled to perform the method according to any one of claims 1-16.

34. A computer program product, wherein when the computer program product runs on a computer, the computer is enabled to perform the method according to any one of claims 1-16.

35. A chip, comprising one or more interface circuits and one or more processors, wherein the interface circuit is configured to: receive a signal from a storage of an electronic device, and send the signal to the processor, wherein the signal comprises computer instructions stored in the storage, and when the processor executes the computer instructions, the electronic device is enabled to perform the method according to any one of claims 1-16.
